(19) Europäisches Patentamt
European Patent Office
Office européen des brevets

(11) EP 2 091 985 B1

(12) EUROPEAN PATENT SPECIFICATION

(45) Date of publication and mention of the grant of the patent:
**20.02.2013 Bulletin 2013/08**

(21) Application number: **07848506.7**

(22) Date of filing: **12.12.2007**

(51) Int Cl.:
***C08F 297/02*** *(2006.01)* ***C09D 153/00*** *(2006.01)*

(86) International application number:
**PCT/GB2007/004762**

(87) International publication number:
**WO 2008/071957 (19.06.2008 Gazette 2008/25)**

# (54) REVERSIBLE MICELLES AND APPLICATIONS FOR THEIR USE

REVERSIBLE MICELLEN UND ANWENDUNGEN FÜR IHRE VERWENDUNG

MICELLES RÉVERSIBLES ET APPLICATIONS POUR L'UTILISATION DE CELLES-CI

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **12.12.2006 GB 0624729**

(43) Date of publication of application:
**26.08.2009 Bulletin 2009/35**

(73) Proprietor: **UNIVERSITY OF LEEDS**
**Leeds LS2 9JT (GB)**

(72) Inventors:
- **BIGGS, Simon**
**University of Leeds**
**Leeds LS2 9JT (GB)**
- **BAQUEY, Gaelle**
**Leeds LS2 9DF (GB)**

(74) Representative: **Teasdale, Nicola Joanne et al**
**Marks & Clerk LLP**
**1 New York Street**
**Manchester, M1 4HD (GB)**

(56) References cited:
**US-A1- 2005 107 531** **US-A1- 2005 215 746**
**US-A1- 2006 223 936**

- **SHU YANG ET AL: "Low-Surface-Energy Fluoromethacrylate Block Copolymers with Patternable Elements" CHEM. MATER., vol. 12, no. 1, 12 November 1999 (1999-11-12), pages 33-40, XP002474029**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to novel compositions for producing reversible micelles in solution and to applications for their use.

The controlled wetting of surfaces has many potential applications such as waterproofing of clothes and fabrics, concrete or paints, windows and windshields. In addition, controlled solid-liquid interfacial properties can have benefits in producing low friction surfaces for use in areas such as swimsuits, driving gear, boats and ships, as well as microfluidic devices.

Further applications in the area of "easy-to-clean" or "self-cleaning" surface coatings are also possible (1, 2). Such surfaces are usually designed to facilitate cleaning by minimising the adhesion of dirt and promoting water repellency such that as water "rolls off" the surface it collects the poorly adhered dirt particles (3). Often, "self-cleaning surfaces" such as are described as in WO 96/04123 are termed "Lotus-effect" surfaces or coatings, and the technology is termed "Lotus-Effect" technology. Such "self-cleaning surfaces" can be produced either by creating the surface structures directly from hydrophobic polymers during the manufacture, or creating the surface structures subsequently, and specifically either by subsequent imprinting or etching or by adhesion of a polymer made of the hydrophobic polymers.

A variety of methods for controlling the wetting of surfaces have been reported, (4,5) based both on the control of the surface chemistry as well as the surface morphology (6). More recently, combinations of these two approaches have been used (3, 7). It is known for example from basic surface wetting theory that a low energy surface (with a concomitant large contact angle, greater than 100°) will tend to repel water. The result will be the formation of drops that roll off the surface easily.

U.S. Patent Application Publication number 2002/0048679 (and related European Patent Application number EP 1018531) describe surfaces from which water runs off easily as having to be either very hydrophilic or hydrophobic. Hydrophilic surfaces have low contact angles with water, and this brings about rapid distribution of the water on the surface and finally rapid run-off of the resultant film of water from the surface. In contrast, hydrophobic surfaces form droplets through large contact angles with water. These droplets can roll off rapidly from inclined surfaces.

Many chemical materials are known to be capable of producing such water repellence; in general the materials possess a very low dielectric constant and are uncharged organics. Amongst these are materials such as halogenated organic polymers such as polytetrafluoroethylene (PTFE) and derivatives (8). One approach for manufacturing such surfaces is often to apply a thin layer of some new material with appropriate characteristics of for example appearance, durability, adhesion, and application requirements, directly onto the surface of interest. Such surface coatings should be easily and uniformly applied; established within a reasonable amount of time and process constraints; have a minimal environmental impact in their synthesis and application; resist the effects of environmental assault; and provide good economic value.

The main problems with such materials to date include;

(a) How to deposit the materials onto a surface of interest since the materials are often soluble in only a limited number of organic solvents? The result is for example spin casting methods, that usually require the liberal use of solvents with the associated cost and environment concerns.

(b) The durability of the coatings when applied and used in 'the real world'. Damage of the coatings by abrasion and impact when in real world use can lead to a compromise in their efficiency. Re-coating can be difficult and expensive and will still have the same issues of environmental concern.

(c) Photodegradation effects caused by sunlight can also compromise the surface integrity and lead to re-application needs.

Random fluorinated copolymers prepared by radical copolymerisation of monomers in solution in a water-miscible organic solvent using peroxides or azo compounds as initiators have been described (see, for example, EP 542598, US 1106630 and US 2004026053), together with their hydrophobic and oleophobic properties on various substrates.

U.S. patent number 5,324,566 describes the use of hydrophobic fluorinated siloxane polymers for producing water repellent surfaces. It is disclosed in this patent that the water repelling properties of the fluorinated siloxane polymer surface film can be improved by forming surface irregularities on the surface and/or the surface film. In one form, the surface is provided with irregularities of a height from about 0.1 micrometers up to the wavelength of visible light. Likewise, U.S. patent number 5,599,489 and EP 0 933 388 A2 describe how the structured surface includes fluorine containing polymers or has been treated using alkylfluorosilanes.

U.S. 2002/0048679 describes surfaces having a smooth, extremely hydrophobic polymer (for example, polytetrafluoroethylene) film and surfaces having a smooth extremely hydrophilic polymer film as examples of surfaces on which water and dirt can run off without forming droplets. U.S. 2002/0048679 further describes how a long-term hydrophobic coating may be formed by applying certain silane derivatives underneath a hydrophobic coating on a surface.

Other self-cleaning surfaces are described in U.S. Patent Application numbers US 2002/0150723, US 2002/0150724, US 2002/0150725, US 2002/0150726, US 2003/0013795 and US 200310147932.

U.S. patent number 3,354,022 discloses water repellent surfaces having a micro rough structure with elevations and depressions and a hydrophobic material based on a fluorine containing polymer. According to one embodiment, a surface with a self-cleaning effect can be applied to ceramic brick or glass by coating the substrate with a suspension comprising glass beads (diameter of 3 to 12 micrometres) and a fluorocarbon wax which is a fluoroalkyl ethoxymethacrylate polymer. Unfortunately, such coatings have a disadvantage in that they posses a low abrasion resistance and only a moderate self-cleaning effect.

Further developments of surface coatings that are designed to produce strongly hydrophobic surfaces include the use of copolymers, polymer blends and mixtures of polymers and nanoparticles (such as titanium dioxide, as described in US 6800354, US 7112621B2, US 7196043 and DE 10016485.4). For example, coated surfaces have been produced using fluorocarbon polymers that can give contact angles of up to 120°. Titanium dioxide ($TiO_2$) has also been used in surface coatings; under UV irradiation the $TiO_2$ is photocatalytically active and can produce super-wetting effects as a result of water hydrolysis effects (9). Hence, if mixed with a very hydrophobic polymer, the wetting can be switched after activation using UV light.

The preparation of such surfaces using nanoparticles suffers from several key drawbacks including the use of organic solvents (US patent number 3,354,022) and the use of a subsequent heat treatment (US patent number 6800354). Thus there is a need for a simple process including an aqueous system for producing surfaces that are "easy-to-clean" or "self-cleaning" by water and transparent (such surfaces are not necessary hydrophobic, but can also be hydrophilic as illustrated in US 2002/0048679).

It has also been demonstrated recently that control over surface wetting can be improved by producing surfaces with a well-controlled micron-sized roughness (10). Such rough surface features assist in producing 'ultrahydrophobic' substrates by physical methods that include trapping air and reducing contact areas between the water drops and the surface. The basic underlying surface should itself be hydrophobic and when combined with the roughness effects this produces surfaces with contact angles greater than 150° which are extremely hydrophobic. However, such surfaces are difficult to manufacture, are usually very fragile and easily damaged and the micron-scale features can cause diffraction effects with light and will therefore be problematic for use in applications involving glass.

Despite these difficulties, products based upon these technologies (or derivatives thereof) are beginning to appear in the market place. This is especially true for self-cleaning glass surfaces where random roughness is used to overcome the diffraction problems. It is still unclear however, how effective these surfaces Will be over time.

In addition to possessing an "easy-to-clean" or "seff-cleaning" surface, it is often desirable for the surface to possess an aesthetically pleasing finish for example, spot-free or shiny that lasts for a reasonable period of time (for example between weeks and months). There are a number of waxes and other products currently in the market for attempting to give a spot-free finish. Typically, these products are designed to hydrophobically modify these surfaces so that that rain water and tap water will 'bead up' on such surfaces. Nonetheless, it is believed that the beading of water on such surfaces may actually increase the formation of water spots since the beads of water will leave deposits on the surface when they dry. Furthermore, products available on the market often require rinsing with water after use. Typically when the water dries from the surface water-marks, smears or spots are left behind. These water-marks, it is believed may be due to the evaporation of water from the surface leaving behind deposits of minerals which were present as dissolved solids in the water (for example calcium, magnesium, sodium ions and salts thereof) or may be deposits of water carried soils, or even remnants from a cleaning product (for example soap scum). This problem is often exacerbated by some cleaning compositions which modify the surface during the cleaning process in such a way that after rinsing, water forms discrete droplets or beads on the surface instead of draining off. These droplets or beads dry to leave consumer noticeable spots or marks known as water-marks. A means of solving this problem, known in the art is to dry the water from the surface using a cloth or chamois before the water-marks form. However this drying process (wiping washed and rinsed surfaces) is time consuming and requires considerable physical effort to the overall washing/cleaning process.

US 5759980 (Blue Coral) describes a composition to eliminate the problem of water-marks on a car. The cleaning composition described therein comprises a surfactant package comprising a fluorosurfactant or a silicone surfactant and mixtures thereof; and a substantive polymer which is capable of bonding to a surface to make it hydrophilic.

DE-A-21 61 591 also describes a composition for cleaning cars wherein the surface is made hydrophilic by the application of amino-group containing copolymers such as polymeric ethyleneimines, polymeric dimethylaminoethylacrylate or methacrylate or mixed polymerisates.

However, it is believed that the polymers described in these two patents may tend to be removed from the surface during rinsing of the product from the surface. Hence the surface hydrophilicity is allegedly provided by the composition described. These compositions may be removed from the surface after the first rinse; consequently the alleged hydrophilicity is also removed. The benefit provided by these compositions is however lost when the surface is rinsed.

US 6846512 B2 (Procter and Gamble) also describes a system and method for cleaning and/or treating a surface and in particular the exterior surface of a vehicle. However, the method requires the application of a non-photoactive nanoparticle coating composition to a surface. Such non photoactive nanoparticles can be inorganic nanoparticles (oxides, silicates, carbonates, hydroxides, layered clay minerals and inorganic metal oxides).

Thus there is a need for surfaces which have "easy-to-clean" or "self-cleaning" properties and which also prevent water-spotting from occurring, even if the rinsed surface is not physically wiped to remove residual water, that is a surface without the appearance of water-marks, even after the treated surface is later contacted with water.

Whilst most commercial surface coatings are produced by casting and or spin coating, using solutions of polymers in organic solvents, alternatives that are based on chemical grafting of polymer films have recently been discussed as possible alternatives. In this approach, coatings that consist of dense brush-like films of polymers chemically attached to a surface are produced. The attached polymers can have controlled chemistry that produces the desired wettability characteristics. Furthermore, the inherent chemical variety available to the synthetic polymer chemist means that such layers can be produced with a wide variety of physical properties, including the opportunity for including a stimulus responsive surface.

Stimuli-responsive polymers (11) are polymers that can respond to small changes in their environment with a large change in some physical property. Typical stimuli include: temperature, pH, ionic strength, light-, electric- and magnetic fields. Some polymers respond to a combination of two or more of these stimuli. For coatings, stimulus responsive polymers may have interest for a wide variety of possible uses where controlled changes in properties such as adhesion, lubrication, and wetting are required.

To manufacture such polymers, a controlled process is required in which a polymer or copolymer synthesis is used to achieve a product with properties such as a desired molecular weight and a narrow weight distribution or polydispersity. Polymers with a narrow molecular weight distribution can exhibit substantially different behaviour and properties to polymers prepared by conventional means. Living radical polymerizations (sometimes referred to as controlled free radical polymerizations) provide a maximum degree of control for the synthesis of polymers with predictable and well-defined structures. Recently, living radical polymerization has been shown to be viable technique to prepare a large diversity of block copolymers.

Recent advances in controlled/living radical polymerization (CLRP) techniques offer unprecedented opportunities for synthesis of such materials with precisely tailored nano- and micro-scale features. Atom transfer radical polymerization (ATRP), nitroxide-mediated polymerization (NMP); reversible addition fragmentation transfer polymerization (RAFT), are part of these recent techniques and even more recently, 'activated regenerated by electron transfer' (ARGET). These methods emerged during the mid-1990s, and have been lately extensively studied since they possess the unique advantage of combining the experimental simplicity of radical polymerization and the living character of anionic polymerization. CLRP techniques were evidenced to be unprecedented tools for macromolecular engineering (that is , for controlling the molecular structure of synthetic polymers), which allow the synthesis of a large variety of polymeric architectures such as block copolymers, graft copolymers, stars, star-blocks, miktoarm stars or macromolecular brushes.

The characteristics of a living polymerization include: polymerization proceeding until all monomer is consumed; number average molecular weight as a linear function of conversion; molecular weight control by the stoechiometry of the reaction; and block copolymer preparation by sequential monomer addition.

It is therefore an object of the present invention to provide novel compositions comprising variable wettable properties that can be deposited onto a surface without the need for organic solvents.

It is a further aim of the present invention is to provide a novel surface coating that promotes variable wettable properties on the surface or in other words provides an "easy-to-clean" surface meaning that an identifiable cleaning benefit ("easier-to-clean", "cleaner-longer", etc.) to a surface will be observed by the end-user.

Therefore, according to a first aspect of the present invention there is provided a novel AB block copolymer obtainable by a controlled living polymerisation reaction comprising:

(i) a first hydrophobic block A, comprising a polymer selected from the group consisting of:

a homopolymer of a fluorinated acrylate or methacrylate monomer A1;
a random, alternating, gradient or block copolymer, A1A2 comprising:
a fluorinated acrylate or methacrylate monomer A1; and a non-fluorinated acrylate or methacrylate monomer A2;
a random, alternating, gradient or block copolymer, A1A2 comprising:
a fluorinated acrylate or methacrylate monomer A1 and a silyl acrylate or methacrylate monomer A3; and
a random, alternating, gradient or block copolymer, A1A2A3 comprising:
a silyl acrylate or methacrylate monomer A1, a fluorinated acrylate or methacrylate monomer A2 and a non-fluorinated acrylate or methacrylate monomer A3; and

(ii) a second hydrophilic block B comprising a non-fluorinated acrylate or methacrylate monomer.

The ratio of the monomers making up each polymer of the block copolymer A-B is such that the volume fraction of the hydrophobic block A and hydrophilic block B agents leads to the formation of organised aggregates, such as micelles. The ratio of the monomers comprising the block copolymer AB comprises:

10-80 units of A and 30 to 200 units of B, preferably 20-40 units of A and 80 to 110 units of B. Most preferably the ratio of the monomers comprising the block copolymer AB comprises: 25 to 35 units of A and 85 to 100 units of B.

In a preferred embodiment of the present invention, block A comprises a random copolymer A1A2 of a fluorinated acrylate or methacrylate monomer A1 and a non-fluorinated acrylate or methacrylate monomer A2 or a homopolymer of a fluorinated acrylate or methacrylate monomer A1.

Preferred fluorinated monomers A1 for block A have the general formula:

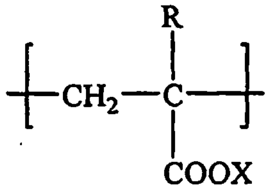

where R comprises hydrogen or an alkyl group having 1 to 4 carbon atoms, preferably methyl, and X comprises a fluorinated alkyl group, preferably comprising 1 to 6 carbon atoms, especially 1 to 4 carbon atoms. It is preferred however that R is hydrogen or methyl.

Preferably, the fluorinated monomer A1 is selected from the group consisting of trifluoroethyl methacrylate (TFEMA), trifluoroethyl acrylate (TFEA), pentafluoropropyl methacrylate (PFPMA), pentafluoropropyl acrylate (PFPA), heptafluorobutyl methacrylate (HFBMA) and heptafluorobutyl acrylate (HFBA). More preferably, the fluorinated monomer is TFEMA.

Preferred non-fluorinated acrylate monomers A2 for block A have the general formula:

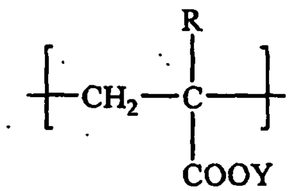

where R comprises hydrogen or an alkyl group having 1 to 4 carbon atoms, preferably hydrogen or methyl. It is preferred that Y comprises an alkylaminoalkyl group, more preferably an alkylaminoethyl group and especially a diethylaminoethyl group.

In a preferred embodiment of the present invention, block A (A1xA2y) comprises a random copolymer of a fluorinated acrylate monomer A1 and a non-fluorinated acrylate monomer A2, preferably where the repeating number of units of the fluorinated monomer A1 is x where x is the range of 0-80 and the repeating number of units of the non-fluorinated monomer is y where y is in the range 0 to (80-x).

More preferably, block A comprises a random copolymer of the repeating units trifluoroethylmethacrylate and diethylaminoethyl methacrylate, preferably in the following numbers :

$P(TFEMA_x\text{-r-}DEAEMA_y)$ where x = 10 to 30 and y = 0 to (30-x).

Preferred silyl acrylate monomers A3 for block A have the general formula:

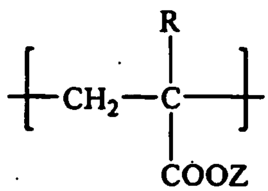

wherein R comprises hydrogen or an alkyl group having 1 to 4 carbons, preferably methyl, and Z comprises a silyl alkyl group, the alkyl group having 1 to 10, preferably 1 to 4 carbon atoms.

Preferably, the silyl group is a trialkoxysilyl group, more preferably, a trimethoxysilyl group. Preferred silyl monomers for block A are (trimethoxysilyl) propyl methacrylate (TMSPMA) and (trimethoxysilyl) propyl acrylate (TMSPA).

The second block B is water soluble and has the general formula:

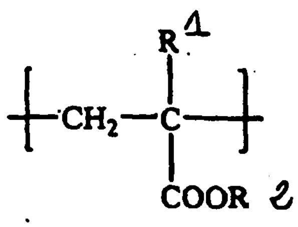

where R1 is hydrogen or an alkyl group having 1 to 4 carbon atoms, preferably methyl and R2 is hydrogen, an alkyl group having 1 to 4 carbon atoms, preferably methyl or an aminofunctional group, preferably being an alkylaminoalkyl group.

Other suitable hydrophilic block B is quaternized dialkylaminoalkyl acrylate or methacrylate monomers having the following formula:

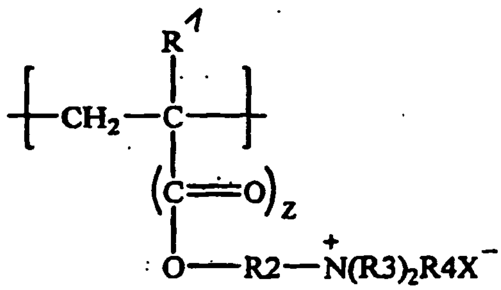

wherein R1 is hydrogen or an alkyl group having 1 to 4 carbon atoms, preferably methyl; z denotes 0 or 1; R2 is $-CH_2-CHOH-CH_2$ or $C_xH_{2x}$ in which x is 2 to 18, preferably x is 2; R3 represents a lower alkyl group from 1 to 4 carbon atoms, preferably methyl, ethyl. R4 denotes a lower alkyl group from 1 to 4 carbon atoms; preferably methyl, ethyl.

$X^-$ is chosen from the group of Cl, Br, I, $1/2SO_4$, $HSO_4$ and $CH_3SO_3$.

More preferably, the second block B comprises the monomers selected from the group consisting of 2-(dimethyl amino) ethyl methacrylate (DMAEMA), 2-(diethyl amino) ethyl methacrylate (DEAEMA), 2-(diisopropyl amino) ethyl methacrylate (DPAEMA), 2-(N-morpholino)ethyl methacrylate (MEMA), or a derivative thereof, methacrylic acid (MAA) or derivative thereof and acrylic acid or a derivative thereof. Most preferably the second block comprises monomers selected from DMAEMA or MAA.

In a preferred embodiment of the present invention, novel copolymers comprise P[(TFEMA-r-DEAEMA)-b-DMAEMA] and P[(TFEMA-r-DEAEMA)-b-MAA] in the proportions defined above.

The block copolymers according to the first aspect of the present invention are obtainable by means of controlled living radical polymerisation to obtain narrow molecular weight distribution copolymers. Suitable synthetic routes include: Reversible Addition - fragmentation chain transfer (RAFT), Group transfer polymerisation (GTP) and Atomic transfer radical polymerisation (ATRP), Activated regenerated by electron transfer (ARGET), nitroxide-mediated polymerization (NMP).

The copolymers according to the present invention have been found to form reversible micelles in aqueous solution.

The block copolymers of the present invention may be available in solid or substantially solid form as for example a powder or alternatively may be available as a compostion.

Therefore according to a second aspect of the present invention there is provided a composition comprising:

(a) a block copolymer according to a first aspect of the present invention and

(b) a liquid medium comprising (i) or (ii); wherein

(i) comprises a mixture of water and an organic solvent; and

(ii) comprises an organic solvent substantially free from water.

In the composition according to the second aspect of the present invention the liquid medium preferably comprises a mixture of water and an organic solvent, or an organic solvent free from water, the block copolymer is preferably completely dissolved in the liquid medium.

Organic solvents suitable for use in the composition of the present invention preferably comprise water-miscible organic solvents selected from: $C_{1-6}$ alcohol, preferably, methanol, ethanol, n-propanol, iso-propanol, n-butanol, and sec-butanol; linear amides; ketones and ketone-alcohols, preferably acetone, methyl ethyl ketone; water miscible ethers; diols, preferably diols having 2 to 12 carbon atoms for example acetone or ethylene glycol.

Organic solvents substantially free from water the organic solvents for use in the composition of the present invention preferably comprise organic solvents selected from the group comprising: tetrahydrofuran, dichloromethane, ethyl acetate, chloroform, lower alcohols, ketones or dimethyl sulphoxide

In addition, when the liquid medium comprises an organic solvent substantial free from water the composition preferably further comprises a suitable polar solvent.

Furthermore, it will be appreciated by one skilled in the art that in the composition of the present invention the organic solvent free from water may comprises a single organic solvent or a mixture of two or more organic solvents.

The relative proportions of components (a) and component (b) in the composition of the present invention comprises between 100 : 1 to 1 : 100, preferably from 10 : 1 to 1 to 10, and especially from 2 : 1 to 1 : 2.

Most preferably the relative proportions of component (a) and component (b) in the composition comprises 1 : 1.

It will also be appreciated that the composition according to the second aspect of the present invention may preferably further comprise additional components selected from for example but not limited to dispersants, perfumes, biocides, colourants and stabilisers.

The compositions of the present invention have many potential uses. The compositions are pH-responsive and accordingly have potential for a wide variety of possible uses where controlled changes in surface properties, such as adhesion, lubrication and wetting are required.

The novel compositions according to the present invention are particularly suitable for use in the coating of a surface to form an "easy-to-clean" surface / a "self-cleaning" surface. To this end, a third aspect of the present invention provides a surface coating comprising a block copolymer according to the first aspect of the present invention or a composition according to a second aspect of the present invention.

A fourth aspect of the present invention provides a method of coating a substrate comprising the steps of :

preparing a solution, preferably an aqueous solution of a copolymer according to a first aspect or second aspect of the present invention in for example an aqueous solution and exposing the substrate to the aqueous solution.

The method includes gentle agitation of the copolymer molecules to fully dissolve the molecules in solution. Preferably, the solution is left to equilibrate for up to 24 hours, prior to application.

Methods of exposing the substrate to the solution include any known technique for forming a coating from a solution, such as spin coating, dip coating, roller coating, brush coating, curtain flow or spraying.

Surfaces that can be treated with the coatings of the present invention include, but are not limited to, glass, plastics, metals, ceramics, concrete, paper, wood, minerals, painted and/or coated substrates. Optionally, the substrate may be rinsed with a pure solvent, such as water, to remove any loosely held copolymer molecules.

It is an advantage of the present invention to provide a process and a composition for producing surfaces that are "easy-to-clean" / "self-cleaning" by water:

- wherein the composition is a stable aqueous-based system,
- wherein a consumer may apply a coating with identifiable cleaning benefit ("easier-to-clean", "cleaner-longer", etc.) to a surface,
- wherein a spot-free finish will be observed on the treated surface (surface without the appearance of water-marks, even after the treated is later contacted with water),
- wherein a transparent coating without significant loss of gloss is formed by the process and composition.

The block copolymers according to the first aspect of the present invention may also be used as uptake-release materials due to their open-close character and enhanced solubilisation capacity.

Accordingly, a fifth aspect of the present invention provides a substance-delivery carrier comprising a block copolymer according to the first aspect of the present invention or a composition according to the second aspect of the present invention in combination with a substance to be delivered to a site, such as for example organic actives, for example but not limited to medicaments.

A sixth aspect of the present invention provides an uptake/release method for a substance comprising the steps

of mixing an aqueous solution of the substance with a copolymer according to the first or second aspects of the present invention, coating a substrate with the aqueous solution and rinsing the coated substrate with a buffer solution at a reduced pH to release the substance.

Preferably, the buffer solution has a pH of less than 5, preferably being 4.

The present invention will now be illustrated by reference to the following examples in which:

Example 1 - describes the preparation of a TFEMA homopolymer, a DEAEMA homopolymer, a poly [TFEMA-r-DEAMA] copolymer and poly [TFEMA-r-DEAMA)-block-DMAEMA] copolymer by RAFT, ATRP and GTP process;
Example 2 - investigates the coating of a substrate with the block copolymer of Example 1;
Example 3 - investigates the "easy-to-clean" properties of a substrate coated with the block copolymer of Example 1; and
Examples 4 and 5 - investigate the use of the block copolymer of Example 1 as responsive uptake/release materials.

The present invention will now also be described and illustrated further with reference to the accompanying drawings in which:

Figure 1 - is graph to demonstrate PTFEMA and PDEAEMA polymerization kinetics, polymerised at 80°C in toluene (25%) in mass, [monomer]/[CPDB]/[AIBN]:30/1/0.4.
Figure 2 - is a graph of evolution number average molar masses (Mn) versus conversion obtained by size exclusion chromatography with THF as eluent for 2-cyanoprop-2-yl dithiobenzoate mediated RAFT polymerization of TFEMA and DEAEMA at 80°C in toluene (25% in mass), [monomer]/[CPDB]/[AIBN]: 30/1/0.4.
Figure 3 - is a graph of polydispersity indices versus conversion for 2-cyanoprop-2-yl dithiobenzoate mediated RAFT polymerization of TFEMA and DEAEMA at 80°C in toluene (25% in mass), [monomer]/[CPDB]/[AIBN]:30/1/0.4. SEC measurements using PMMA standard and THF as eluent.
Figure 4 - is an example of evolution of size exclusion chromatograms with time for 2-cyanoprop-2-yl dithiobenzoate mediated RAFT polymerization of TFEMA and DEAEMA at 80°C in toluene (25% in mass), [monomer]/[CPDB]/[AIBN] : 30/1/0.4. SEC measurements using PMMA standards and THF as eluent.
Figure 5 - is a SEC chromatogram of several poly [TFEMA-random-DEAEMA] copolymers for 2-cyanoprop-2-yl dithiobenzoate mediated RAFT random copolymerization at 80°C in toluene.
SEC measurements using PMMA standards and THF as eluent.
Figure 6 - is a SEC chromatogram of P(TFEMAg-r-DEAEMA$_{19}$) copolymer used as macroRAFT agent and P[(TFEMAg-r-DEAEMA$_{19}$)-b-DMAEMA$_{90}$].
Figure 7 - is a 1 μm x 1 μm in-situ AFM image of adsorbed copolymer micelles at the mica-water interface. Copolymer sample was P[(TFEMA$_5$-r-DEAMEA$_{25}$)-b-DMAEMA$_{89}$] at 500 ppm concentration. Background electrolyte is 0.01 M $KNO_3$ and solution pH=9.
Figure 8 - is a 1 μm x 1 μm in situ AFM image of adsorbed copolymer micelles at the mica-water interface. The copolymer sample was P[(TFEMA$_5$-r-DEAEMA$_{25}$)-b-DMAEMA$_{89}$] at 500 ppm concentration. The background electrolytes is, 0.01M $KNO_3$ and solution pH = 4.
Figure 9 - is a graph illustrating optical reflectometry data of the relative adsorbed mass as a function of time. The data relates to the adsorption of p[(TFEMA$_{14}$-r-DEAEMA$_{14}$)-b-DMAEMA$_{90}$] at the silica water interface. The concentration of copolymer is 500ppm. The background electrolyte is 0.025M borax and solution pH = 9.
Figure 10 - is in situ AFM images of the surface adsorbed layer formed at the mica-water interface of P[(TFEMA$_9$-r-DEAEMA$_{19}$)-b-DMAEMA$_{90}$] copolymer sample. The background electrolyte is 0.01M $KNO_3$. The data is for a pH9-pH4-pH9 rinse cycle.
Figure 11 - is a graph illustrating force curve data collected at the mica-water interface.
Figure 12 - is Zeta sizer data for various copolymer samples where (●) is P(DEAEMA$_{30}$-b-DMAEMA$_{95}$), (■) is P[(TFEMA$_5$-r-DEAEMA$_{25}$)-b-DMAEMA$_{89}$]; (▲) is P[(TFEMA$_9$-r-DEAEMA$_{19}$)-b-DMAEMA$_{90}$]. The concentration of copolymer is 500 ppm. The background electrolyte is 0.01 M $KNO_3$. The was data collected using static light scattering.
Figures 13A to 13E - are images of water droplets at an uncoated solid surface and coated solid surface provided with different copolymer samples.
Figure 14 - illustrates the roughness of the surface adsorbed layer formed at the mica-water interface of P[(TFEMA$_{25}$-r-DEAEMA$_{11}$)-b-DMAEMA$_{94}$] copolymer sample.
Figure 15 - illustrates s a bar chart showing a comparison of the percentage of soiling removed after rinsing a coated and an uncoated surface.
Figure 16 - illustrates a comparison of the total colour difference ΔE, of soiled panels, panels after rinsing (10ml water) and panels after a second rinse (100ml water);
Figure 17 - is the relative adsorbed mass of the polymer layer onto a silica-crystal. The data was obtained by Quartz

Crystal Microbalance at different pH.

Figures 18A to 18D - illustrates the "easy-to-clean" properties of a substrate applied with a coating according to the present invention. Figure 18A illustrates the substrate after application of dirt solution, Figure 18B illustrates the substrate after one week, Figure 18C illustrates the substrate after 3 months and Figure 18D illustrates the substrate after 14 months in outside conditions in a natural environment.

Figures 19A and 19B - illustrate the "spot-free finish" properties of a substrate applied with a coating according to the present invention.

Figure 20 - is a photographic image of (A) uncoated silica particles, (B) silica particles coated with micelle-copolymer according to the present invention preloaded with Orange OT dye and (C) silica particles after rinsing at pH 4.

Figure 21 - is a photographic image of (A) uncoated silica particles, (B) silica particles coated with micelle-copolymer according to the present invention preloaded with chrysoidine dye, (C) silica particles after 30 minutes rinsing at pH 4 and (D) silica particles after 3 hours rinsing at pH 4.

Most existing approaches to produce surfaces with controlled and/or variable wetting require either complex micro-machining of surfaces or complex and expensive chemical methods, often with inherent environmental concerns related to the use of organic solvents. The compositions of the present invention produce surfaces with inherent micro (nano)-scale structure (with the possible wetting benefits that infers) that are also stimulus responsive and have associated 'tunable' properties using a simple aqueous based self-assembly route having minimal processing requirements. The surface coatings form spontaneously when a water-based solution of the polymers is applied to the surface of interest, thus removing the need for organic solvents for their deposition on the surface. The surface coatings also provide a higher contact angle than an uncoated substrate that tends to repel water and provide a better washing off of the substrate.

In particular, the present invention provides a new family of pH-responsive AB block copolymers wherein the first block A is a random copolymer of a non-fluorinated acrylate monomer and fluorinated acrylate monomer or a homopolymer of a fluorinated acrylate monomer. The second block B is water-soluble and comprises an acrylate or acrylic acid derivative monomer. These novel copolymers have been found to provide superior variable wettable surfaces when applied to a substrate that could not be predicted from the prior art.

Example 1: Preparation of Block Copolymers according to the invention.

The new AB block copolymers according to the present invention were prepared from 2-(dimethylamino)ethyl methacrylate (DMAEMA), 2-(diethylamino)ethyl methacrylate (DEAEMA) mixed with a fluorinated monomer: trifluoroethylmethacrylate (TFEMA): poly(TFEMA)-random-poly(DEAEMA)-block-poly(DMAEMA) were produced by Reversible Addition-Fragmentation Chain Transfer (RAFT) polymerization which is a controlled/living polymerization that can synthesize well-defined homopolymers and block copolymers using the RAFT agent, 2-cyanoisopropyl dithiobenzoate (CPDB).

Since the kinetics of each monomer is unique, knowledge of polymerization kinetics of PTFEMA and PDEAEMA facilitates the synthesis of polymers with desirable characteristics. The synthesis of diblock copolymers of poly(TFEMA)-random-poly(DEAEMA) copolymers, and copolymers poly(TFEMA)-random-poly(DEAEMA)-block-poly(DMAEMA) is also demonstrated for the first time.

Whilst the current example prepares the block copolymer using the RAFT agent, CPDB, it is to be appreciated that other RAFT agents may be used. Similarly, the block copolymers may be prepared by means of other controlled living polymerisation techniques, such as group transfer polymerisation (GTP), atomic transfer radical polymerisation (ATRP) and Activated regenerated by electron transfer (TARGET) or Activated generated by electron transfer (AGET).

RAFT synthesis of TFEMA homopolymer.

The following conditions were used for the synthesis of PTFEMA with a targeted polymerization degree of 30. TFEMA (2.53 g, 15.05 mmol), CPDB (0.119 g, 0.537 mmol), AIBN (34 mg, 0.207 mmol) and toluene (solvent, 0.675g, 25% in mass) were introduced into a schlenk tube containing a magnetic stirrer. The mixture was separated into several samples. All of the samples were degassed by nitrogen bubbling and heated at 80°C in a thermostated oil bath under nitrogen atmosphere. After x hours of polymerization, the vial was immersed into ice to stop the polymerisation (refer to Figure 1 for value of "x", corresponding to the reaction time). The conversion was determined by $^1H$ NMR spectroscopy at 400 MHz, integrating one vinylic proton (6.11 ppm) in comparison with triplet peak (at 4.2 ppm, from the monomer $CH_2$) + large peak (at 4.1 ppm, from $CH_2$ polymer). The molar masses and polydispersity indices were determined by SEC using PMMA standard calibration and THF as eluent, (see Figures 2 and 3). The experimental molar masses were compared to theoretical values calculated according to the following equation (1):

$$Mn_{th,NMR} = M_{CPDB} + M_{TFEMA} \times \frac{[TFEMA]_0 \times C_{TFEMA}}{[CPDB]_0} \quad (1)$$

where:

$M_{CPDB}$ and $M_{TFEMA}$ are the molar masses of CPDB and TFEMA, respectively $[CPDB]_0$ and $[TFEMA]_0$, the initial concentration of CPDB and TFEMA and $C_{TFEMA}$, the fraction conversion. The contribution of the molar mass of the chains initiated by AIBN was neglected.

RAFT synthesis of DEAEMA homopolymer.

A procedure similar to PTFEMA polymerization was used for PDEAEMA synthesis. DEAEMA (2.78 g, 15.05 mmol), CPDB (0.113 g, 0.51 mmol), AIBN (34 mg, 0.207 mmol) and toluene (solvent, 0.73g, 25% in mass) were mixed together. After degassing by nitrogen bubbling, polymerization was conducted under nitrogen at 80°C. Figure 1 of the accompanying drawings illustrates the RAFT polymerization kinetics for TFEMA and DEAEMA homopolymerization. The resultant samples were analysed by SEC and NMR spectroscopy (see Figure 2 and 3).

RAFT synthesis of Poly[TFEMA-random-DEAEMA1 copolymer : P(TFEMA-r-DEAEMA).

A series of poly[$TFEMA_x$-random-$DEAEMA_y$] copolymers were prepared by RAFT polymerization using CPDB as chain transfer agent and AIBN as initiator, as shown in Table 1 below. For the ratio [CPDB]/(AIBN] : 1/0.4, several ratio of monomers were used: [TFEMA] = x = 0 to 30 and [DEAEMA] = y = 30 - x.

Table 1 : Reaction conditions used for RAFT random copolymerisation of TFEMA and DEAEMA at 80°C over 3 hours under nitrogen.

| Trial | Monomer 1 | Monomer 2 | RAFT agent | Initiator | Solvent |
|---|---|---|---|---|---|
| | DEAEMA (mmol) | TFEMA (mmol) | CPDB (mmol) | AIBN (mmol) | Toluen (mmol) |
| 1 | 29.994 | - | 1.007 | 0.402 | 15.954 |
| 2 | 25.072 | 5.014 | 1.003 | 0.396 | 15.628 |
| 3 | 20.041 | 10.011 | 1.039 | 0.414 | 15.346 |
| 4 | 14.989 | 14.995 | 1.007 | 0.414 | 15.422 |

Polymerizations were carried out at 80°C in toluene (25% in mass) over 3 hours. Samples were withdrawn after 3 hours and the obtained polymers were analysed by SEC in THF and NMR, see Figure 4.

The formula of P($TFEMA_x$-r-$DEAEMA_y$) copolymer with x = 0 to 30 and y = 30-x is shown below.

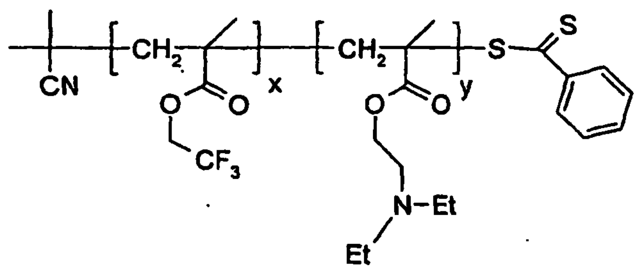

Formula (1)

Table 2 below illustrates the characterization results of Poly[TFEMA-random-DEAEMA] copolymers.

Table 2

| Trial | Ratio M 1/ M 2 determined by NMR | | Conversion (%) | | Mn theory (g/mol) | Mn calculated NMR (g/mol) | Mn calculated SEC (g/mol) | PDI |
|---|---|---|---|---|---|---|---|---|
| | DEAEMA | TFEMA | DEAEMA | TFEMA | | | | |
| 1 | 29 | - | 97.6 | - | 5600 | 5600 | 5990 | 1.16 |
| 2 | 25 | 5 | 97.54 | 97.45 | 5560 | 5700 | 6600 | 1.14 |
| 3 | 19 | 9 | 95.8 | 96.6 | 5210 | 5250 | 6710 | 1.17 |
| 4 | 14 | 14 | 96.22 | 96.23 | 5280 | 5170 | 7190 | 1.13 |

RAFT synthesis of Poly[(TFEMA-random-DEAEMA)-block-DMAEMA1 copolymer : P[(TFEMA-r-DEAEMA)-b-DMAEMA].

For the synthesis of the diblock P[(TFEMA-r-DEAEMA)-b-DMAEMA] copolymers, RAFT synthesized P(TFEMA-r-DEAEMA) was used as macroRAFT agent. Chain extension experiments were carried out to obtiain P[(TFEMA-r-DEAEMA)-b-DMAEMA] copolymers. This allowed appreciation of the degree of 'livingness' of P(TFEMA-r-DEAEMA) chains obtained by CPDB-mediated RAFT polymerization.

The formula of P[(TFEMAx-r-DEAEMAy)-b-DMAEMAz] copolymer with x = up to 30; y=30-x; z=90 is as follows:

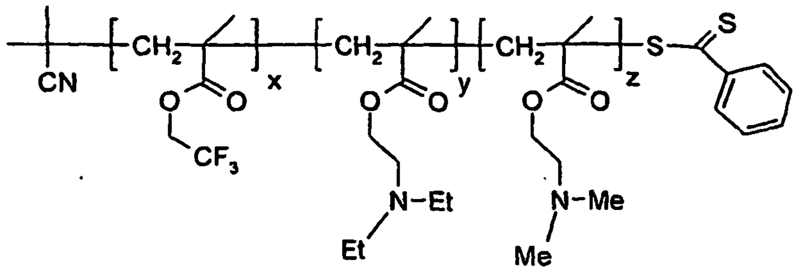

**Formula 2**

Typically, the general conditions for polymerization is 80°C in toluene (25% in mass), using the following ratios: [DMAEMA]/[macro RAFT agent]/[AIBN] : 100/1/0.4. Samples were withdraw after 3 hours (conversion of DMAEMA of 90%), and the obtained polymers were analysed by SEC in THF and NMR (see Figure 5). The observed shift of the chromatogram is consistent with an extension of chains.

ATRP synthesis of Poly[TFEMA-random-DEAEMA]-Cl copolymer : P(TFEMA-r-DEAEMA)-Cl as macroinitiator.

All monomers of DEAEMA, TFEMA and DMAEMA were purified by passing through an alumina column prior to use in order to remove inhibitor.

To a dry 25-mL Schlenk flask with a magnetic stirring bar, copper chloride, CuCl (0.0336 g, 0.3 mmol) was added, and the Schlenk flask was evacuated and flushed with nitrogen. DEAEMA (0.77 g, 4.26 mmol), TFEMA (3.46 g, 20.6 mmol), 1,1,4,7,10,10-hexamethyl-triethylenetetramine (HMTETA) (0.088 g, 0.4 mmol), and degassed methanol (2.5 mL) and distilled water (0.5 mL) were added to the Schlenk flask using degassed syringes. The mixture was stirred for 10 minutes. The flask was then placed in a water bath maintained at 25 $\pm$ 0.2 °C. Finally, *p*-Toluenesulfonyl chloride (*p*-TsCl) (0.0636 g, 0.3 mmol) was added. The reaction was allowed to proceed with constant stirring for 3 hours. The polymerization was terminated by exposing the reaction vessel to air, and cooling down in a ice bath. Then 10 ml of $CH_2Cl_2$ was added. The solution was passed through a basic alumina column and eluted with additional 100 ml of $CH_2Cl_2$. After being concentrated in a rotary evaporator, the solution was poured into cold hexane to precipitate the polymer. The recovered polymer was dried in a vacuum oven overnight at 40 °C. The polymer P(TFEMA$_{24}$-r-DEAEMA$_5$)-Cl was obtained and characterized by NMR and SEC.

ATRP synthesis of Poly[(TFEMA-random-DEAEMA)-block-DMAEMA] copolymer : P[(TFEMA-r-DEAEMA)-b-DMAEMA].

P(TFEMA-r-DEAEMA)-Cl was synthesized using the p-TsCl/CuCl initiator system as previously described. A representative experimental procedure for the synthesis of the block copolymer P[(TFEMA-r-DEAEMA)-b-DMAEMA] is described as follows:

To a 25-ml Schlenk flask equipped with a magnetic stirring bar, P($TFEMA_{24}$-r-$DEAEMA_5$)-Cl (*M*n,SEC = 9200; *M*w/Mn = 1.09) (0.36 g) and CuCl (0.007 g, 0.07 mmol) were added. DMAEMA (1.38 g, 8.79 mmol) and degassed methanol/water mixed solvent (methanol 4.0 ml, water 0.4 ml) were then added via nitrogen-purged syringes. The mixture was stirred at room temperature for 10 minutes, after which it was degassed by flushing nitrogen. Finally, HMTETA (0.019 ml, 0.08 mmol) was added via an nitrogen-purged syringe. The flask was then placed in a water bath maintained at 25°C, and the reaction time was 3 hours. After precipitation in a cold hexane, the recovered polymer P($TFEMA_{24}$-r-$DEAEMA_5$)-b-$DMAEMA_{30}$ was dried in a vacuum oven overnight at 40 °C and analyzed by NMR and SEC.

GTP synthesis of Poly[(TFEMA-random-DEAEMA)-block-DMAEMA] copolymer : P[(TFEMA-r-DEAEMA)-b-DMAEMA]

To synthetize the polymer by GTP, it is first necessary to prepare a catalyst such as tetra-n-butyl ammonium bibenzoate (TBABB) by the method of Dicker et al described in the literature [Dicker IB, Cohen GM, Famham WB, Hertler WR, Laganis ED, Sogah DY, Macromolecules, 23, 4034-4041 (1990)]. The catalyst TBABB (23.6 mg, 0.065 mmol) was added from a side arm under a nitrogen purge in a 250 ml three-necked round bottom flask. Anhydrous tetrahydrofuran (100 ml) was then transferred into the flask via cannula before the addition of 1-methoxy-1-trimethylsiloxy-2-methyl-1-propane (MTS, 0.6 ml, 2.96 mmol). This solution was stirred for 20 minutes and then monomer DMAEMA (15.68, 99 mmol) was added dropwise via cannula. In the meantime, a thermometer was fitted to the side of the reaction vessel to monitor the exotherm during the addition of monomer. It was observed that the reaction temperature increased by 7 to 18 °C. The reaction mixture was stirred until the solution temperature returned to room temperature (approximatively 60 minutes). Then an aliquot of the reaction mixture was extracted via syringe for NMR and SEC analyses. Subsequently, a mixture of monomers TFEMA (2.51 g, 14.9 mmol) and DEAEMA (2.77 g, 14.9 mmol) was added dropwise via a cannula and a second exotherm was recorded. The reaction mixture was stirred at room temperature until the exotherm abated (approximatively 60 minutes). After a further aliquot was extracted for NMR and SEC analyses, the block copolymer was terminated with methanol (3ml). The solvent was then removed using a rotary evaporator. Finally, the polymer was precipitated in cold hexane, recovered by filtration and then dried in a vacuum oven at 50 °C overnight.

RAFT synthesis of Poly[(TFEMA-random-DEAEMA)-block-MAA] copolymer : P[(TFEMA-r-DEAEMA)-b-MAA]

For the synthesis of the diblock P[(TFEMA-r-DEAEMA)-b-MAA] copolymers, RAFT synthesized P($TFEMA_{14}$-r-$DEAEMA_{14}$), as described in Table 2, was used as macro RAFT agent. Chain extension experiments were carried out to obtain P[(TFEMA-r-DEAEMA)-b-MAA] copolymers at 60 °C in propan-2-ol with AIBN as initiator, using the following ratio ([MAA]/[macro RAFT agent]/[initiator]=90/1/0.5). The polymerisation was allowed to proceed for 3hours, and a conversion of 87% obtained by $^1$H NMR in DMSO. The resultant product, P[(TFEMAx-r-DEAEMAy)-b-MAAz] copolymer with x = 14; y = 14; z = 78 determined by NMR.

RAFT synthesis of Poly(TFEMA-random-DEAEMA-random-TMSPMS) copolymer: P[(TFEMA-r-DEAEMA-r-TMSPMS) as macroRAFT agent.

TFEMA (0.619 g, 3.68 mmol), DEAEMA (3 g, 16.5 mmol), TMSPMS (0.36 g, 1.47 mmol), CPDB (0.111 g, 0.5 mmol), AIBN (35 mg, 0.2 mmol) and toluene (solvent, 1g) were introduced in a schlenk tube containing a magnetic stirrer. The mixture was degassed by nitrogen bubbling and heated at 80°C in a thermostated oil bath under nitrogen atmosphere. After 70 minutes, the reaction was cooled to 0 °C to stop the polymerization. After precipitation in a cold hexane, the recovered polymer was dried in a vacuum oven overnight at 40 °C. The polymer obtained P($TFEMA_6$-r-$DEAEMA_{26}$-r-$TMSPMS_2$), was analysed by NMR and SEC.

RAFT synthesis of Poly[(TFEMA-random-DEAEMA-random-TMSPMS)-block-DMAEMA] copolymer : P[(TFEMA-r-DEAEMA-r-TMSPMS)-b-DMAEMA].

The previous macroRAFT agent P($TFEMA_6$-r-$DEAEMA_{26}$-r-$TMSPMS_2$) (2.76 g), DMAEMA (8.69 g, 55 mmol), AIBN (36 mg, 0.22 mmol) and toluene (2.85g) were introduced in a schlenk tube containing a magnetic stirrer. The mixture was degassed by nitrogen bubbling and heated at 80 °C in a thermostated oil bath under nitrogen atmosphere. After 2 hours, the reaction was cooled to 0 °C to stop the polymerization. After precipitation in a cold hexane, the recovered

polymer was dried in a vacuum oven overnight at 40 °C. The polymer obtained P(TFEMA$_6$-r-DEAEMA$_{26}$-r-TMSPMS$_2$)-b-DMAEMA$_{100}$ was analysed by NMR and SEC.

EXAMPLE 2: Coating of substrate with copolymer of the present invention.

The copolymer molecules were dissolved in water at the desired pH and salt conditions under gentle agitation. Typically the system was left to equilibrate for 24 hours to be certain that it was fully equilibrated but it is to be appreciated by one skilled in the art that equilibrium may well be achieved within shorter timescales. Agitation is not critical and simple slow stirring is sufficient.

The substrate of interest was then exposed to the solution. Adsorption was found to be complete after a few minutes. Suitable application methods include for example but are not limited to: dipping, spraying, spin coating, roller coating, brush coating and rinsing of the surface.

The substrate was then rinsed with pure solvent (water) to remove loosely held copolymer molecules at the surface. However, it is also to be appreciated that this step is not essential for the application under real conditions.

Figures 7 and 8 of the accompanying drawings demonstrate that adsorbed micellar aggregates are visible at the solid liquid interface. These surface adsorbed films form spontaneously and provide a continuous surface covering. The adsorbed films also provide local micro(nano)-scale structure at the solid surface and the structure is pH-dependant. Figure 7 illustrates the aggregates at pH 9 and Figure 8 illustrates the aggregates at pH4. Adsorption kinetic data indicates that adsorption occurs rapidly (a few seconds to minutes) from aqueous dispersion, see Figure 9 of the accompanying drawings. Wash-on and wash-off data indicated that the adsorbed film is robust after an initial rinse phase that removes loosely bound material. The stimulus response of the layers can also be seen in these data; the reversible nature of this response is also seen.

AFM images of the surfaces under different pH conditions indicate structure changes are visible (and reversible) as seen in Figure 10. Reversible surface behaviour is related to bulk behaviour that shows a reversible micelle formation as a function of pH in bulk solution.

Figure 11 illustrates force curve data collected at the mica-water interface (background electrolyte is $KNO_3$ 0.01M) and Figure 12 illustrates Zeta sizer data for copolymer samples. Additionally, images of a sessile droplet on a dried film of copolymer micelles prepared by deposition from a pH 9 solution onto silica and subsequent washing and drying were taken and the contact angle measured, as seen in Figure 14.

Figure 13A. is an image of a water droplet on an uncoated silica surface having a measured contact angle of 27°.

Figures 13B to 13E are images of water droplets at a coated solid surface with different copolymer samples as follows:

13B - coated silica with P(DEAEMA$_{30}$-b-DMAEMA$_{95}$) copolymer. Measured contact angle is 42°.
13C - coated silica with P[(TFEMA$_5$-r-DEAEMA$_{25}$)-b-DMAENLA$_{89}$] copolymer. Measured contact angle is 66°.
13D - coated silica with P[(TFEMA$_{14}$-r-DEAEMA$_{14}$)-b-DMAEMA$_{89}$] copolymer. Measured contact angle is 79°.
13E - coated aluminium sheet with P[(TFEMA$_{14}$-r-DEAEMA$_{14}$)-b-DMAEMA$_{89}$] copolymer. Measured contact angle is 89°.

The roughness of a coated glass slide was calculated using Nanoscope software from AFM images monitored in tapping mode in air. The glass slide was coated with the polymer P[(TFEMA$_{25}$-r-DEAEMA$_{11}$)-b-DMAEMA$_{94}$]. AFM images and roughness calculations were monitored before water rinsing, after a first rinse with 10 ml of water, after a second and third rinse (each with 10 ml of water) and after a last subsequent rinse (500 ml of water). After each rinsing, the glass slide was dried in nitrogen. It has been observed that the roughness is approximately constant after each rinse, corresponding to no loss of material after rinsing, as shown in Figure 14. The profile of a scratch in the layer was also measured and after rinsing the thickness remained constant.

EXAMPLE 3: "Easy-to-clean" or "self-cleaning" properties of coating according to the present invention.

Figure 15 illustrates a comparison of the percentage of soiling removed after rinsing. This percentage was calculated from the reflectivity (R) of white light from 16 panels. 8 panels were coated in polymer P[(TFEMA$_{37}$-b-MAA$_{105}$] and 8 were uncoated.

$$\%\ \text{soiling removed} = \frac{R_r - R_s}{R_p - R_s} \times 100 \qquad \text{Equation (2)}$$

where:

$R_r$ = R of rinsed panel, $R_s$ = R of soiled panel and $R_p$ is the R of the panel before soiling.

After the first rinse (20 ml water), 95.4% of the soil was removed from the coated panels compared with just 78.5% removed from uncoated panels. After the second rinse (100ml water) the percentage removed increased to 96.8% for coated panels and 81.1% for uncoated panels. Most soil is removed during the first rinse and more soil is removed from coated panels than uncoated panels. Accordingly, it is clear that the novel copolymers according to the present invention provide superior "easy-to-clean" or "self-cleaning" results.

Further spectrophotometry tests have been carried to evaluate the colour difference between treated and untreated painted aluminium surface. Figure 16 illustrate a comparison of the total colour difference ΔE, of soiled panels, panels after rinsing (10ml water) and panels after a second rinse (100ml water). Eight panels were coated in polymer P[($TFEMA_{37}$-b-$MAA_{105}$] and eight were uncoated. The colour difference was calculated from the CIE 1964 colour system. The system considers the lightness L*, the red-green value a* and the yellow-blue value, b*.

$$\Delta E = (\Delta L^2 + \Delta a^2 + \Delta b^2)^{1/2} \qquad \text{Equation (3)}$$

where:

$$\Delta L = L_1 - L_2, \qquad \Delta a = a_1 - a_2, \qquad \Delta b = b_1 - b_2$$

and

ΔL, Δa, Δb are the colour differences in CIE L*a*b* colour space
$L_1$, $a_1$, $b_1$ are the L*a*b* values for sample 1 (clean panel before soiling)
$L_2$, $a_2$, $b_2$ are the L*a*b* values for sample 2 (panel after soiling or rinsing)

After soiling, the colour difference ΔE is less for coated panels (13.7) than for uncoated panels (16.6). This corresponds to less initial soil adhesion on the coated panels. After the first rinse, ΔE decreases to 0.6 for coated panels and 3.4 for uncoated panels. Therefore, more soiling has been removed from the coated panels. After the second rinse, ΔE decreases again to 0.5 for coated panels and 3.0 for uncoated panels. Although more soil is removed after the second rinse, it is apparent that most soil is removed after the first rinse and only excessive rinsing will promote further removal. This demonstrates clearly that the novel copolymer of the present invention once coated onto a surface provide an easier soil removal compared with uncoated surface. The coated panels also perform better due to less initial soil adhesion.

Self-cleaning tests were carried out on aluminium sheet that had been powder coated with a polyester based resin. A yellow dye was used as an indicator as to how much and where the copolymer was applied during application. Test pictures clearly showed a change from hydrophilic surface to hydrophobic surface after application of copolymer, as illustrated by Figures 13A and 13E of the accompanying drawings referred to above.

Figure 18A to 18D of the accompanying drawings illustrate the "easy-to-clean" or "self-cleaning" properties of sheets A, coated with a copolymer according to the present invention. After rinsing with water, dirt is washed from the coated sheets A, but remains on the uncoated sheets B, even after 14 months, as seen in Figure 18D.

Whilst not wishing to be bound by any particular theory, it appears that dirt initially sticks to the coating and when it rains, water flows down the surface in a sheet-like manner which washes away the dirt. In contrast, for the uncoated sheet, it appears that water trickles along the surface of the sheet. The effect of the hydrophobic inner core of the micelles on the drying process was also surprising. The inner core is very hydrophobic which appears to make any remaining water roll into a ball and run off the surface causing it to dry very quickly. It also appeared to eliminate the dirty "streaking" seen on uncoated panels. Accordingly, it is clear that the novel copolymers according to the present invention provide superior "easy-to-clean or self-cleaning" results.

Furthermore, the novel copolymer coating according to the present invention allows a fast drying with the result that no drops remain on the surface. Indeed, it has been observed that due to the hydrophilic nature of the treated surface, any water present form a thin, continuous or semi-continuous layer rather than discreet droplets on a treated surface. When water in this form evaporates, the minerals therein are not concentrated enough in terms of location to be visible. Accordingly, no spots are formed. Much of the water film or sheet slides off the washed surfaces by the action

of gravity without forming rivulets, streaking or tracking. In other words, water slides off as a sheet rather than discrete droplets or rivulets conglomerated along a particular path on the washed surface. Rinse water that does not slide off remains on the washed surfaces still in the form of a thin sheet or film. When the sheet or film evaporates, water spots do not form as is clearly illustrated in Figures 19A and 19B.

EXAMPLE 4: Use of coating according to the Present invention as responsive uptake/release materials.

Water soluble block copolymers are of interest because copolymer micelles can provide a suitable local environment for the loading of hydrophobic actives such as drugs and dyes. Stimulus-responsive copolymers according to the present invention (in particular P[TFEMA-r-DEAEMA)-b-DMAEMA]) undergo reversible micellar self assembly in aqueous solution, thus offering opportunities for use as responsive uptake/release materials.

A series of experiments were performed using micelles preloaded with a hydrophobic organic dye, (Orange OT). Copolymer micelle layer was prepared on silica colloid (AngstromSphere) via the following procedure. An aqueous solution of P[($TFEMA_{14}$-r-$DEAEMA_{14}$)-b-$DMAEMA_{90}$] at pH 9 (10 ml, 500 ppm in $KNO_3$ (10 mM) was mixed with the Orange OT at pH 9. Then this mixture was added to a dispersion of the silica sol (white, 0.1 g) and tumbled 12 hours to ensure full equilibration. The sample was then centrifuged (4000 rpm, 20 minutes) to separate the colloidal particles from the nonadsorbed copolymer. Approximatively all of the supernatant was removed and orange coated silica particles were recovered (see picture B, Figure 20). The sedimented particles were redispersed in an electrolyte solution ($KNO_3$) at pH 4 for 12 hours. The sample was then centrifuged to isolate the colloidal particles (see picture C, Figure 20) and the supernatant removed.

The pictures A and B clearly show a colour change before and after coating the silica particles. It is obvious that micelle-copolymer can capture the dye. In this respect because of its low water solubility, this dye is adsorbed into the hydrophobic cores of the copolymer micelles. After initial preparation of dye-loaded copolymer micelle solution, a silica colloid was coated by this solution. After deposition of one layer, the silica colloid becomes colourful, indicating the capture of the dye. Then, by rinsing the coated silica particles with a buffer solution at low pH, the dye colour was removed showing the release mechanism of this system.

EXAMPLE 5: Use of coating according to present invention as responsive uptake/release materials.

A series of experiments were performed using micelles preloaded with chrysoidine, a yellow dye.

Copolymer micelle layer was prepared on silica colloid (AngstromSphere) via the following procedure. An aqueous solution of P[($TFEMA_5$-r-$DEAEMA_{25}$)-b-$DMAEMA_{89}$] at pH 9 (10 ml, 500 ppm in $KNO_3$ (10 mM) was mixed with the Chrysoidine (yellow dye less hydrophobic than Orange OT) at pH 9. This mixture was then added to a dispersion of the silica sol (white, 0.1 g) and tumbled for 12 hours to ensure full equilibration. The sample was then centrifuged (4000 rpm, 20 minutes) to separate the colloidal particles from the nonadsorbed copolymer. Approximatively all supernatant was removed, and yellow coated silica particles were recovered (see picture B, Figure 21). The sedimented particles were redispersed in an electrolyte solution ($KNO_3$) at pH 4 for 30 minutes. Then, after centrifugation (4000 rpm, 10 min) the supernatant was removed and slightly yellow colloidal particles were isolated (see picture C, Figure 21). After a longer period of rinsing at pH 4 (3 hours), and centrifugation, white colloidal particles were obtained, proving a total release of the dye (see picture D, Figure 21).

References

1. Emma Dorey, Chemistry& industry, issue 18, 5 (september 2006), "No more need to clean"
2. Ralf Blossey, Nature Materials, vol 2, 301-306, (2003), "Self-cleaning surfaces-virtual realities"
3. Jon Evans, Chemistry& industry, issue 18, 16-17 (september 2006), "Go with the flow"
4. Mathilde Callies, David Quéré, Soft matter, vol 1, 55-61, (2005), "On water repellency"
5. Taolei Sun, Wenlong Song, Lei Jiang, Chem.Comm., 1723-1725, (2005), "Control over the responsive wettability of poly(NIPAAm) film in a large extent by introducing an irresponsive molecule"
6. *a/* S. Herminghaus, Europhys. Lett., 52, 165, (2000), "Roughness-induced non-wetting". b/ J. Bico, U. Thiele, D. Quéré, Colloids Surf., A, 206, 41, (2002), "Wetting of textured surfaces". c/ H. Li, X. Wang, Y. Song, Y. Liu, Q. Li, L. Jiang, D. Zhu, Angew. Chem. Int. Ed., 40, 1743,(2001)," Super-"Amphiphobic" Aligned Carbon Nanotube Films". d/ L. Feng, S. Li, H. Li, J. Zhai, Y. Song; L. Jiang, D. Zhu, Angew. Chem. Int. End., 41, 1221, (2002), "SuperHydrophobic Surface of Aligned Polyacrylonitrile Nanofibers". e/ L. Feng, Y. Song, J. Zhai, B. Liu, J. Xu, L. Jiang, D. Zhu, Angew. Chem. Int. Ed., 42, 800, (2003), "Creation of a Superhydrophobic Surface from an Amphiphilic Polymer". f/ T. Onda, S. Shibuichi, N. Satoh, K. Tsujii, Langmuir, 12, 2125, (1996), "Super-Water-Repelient Fractal Surfaces".

7. Igor Luzinov, Sergiy Minky, Vladimir V.Tsukruk, Prog.Polym.Sci., vol 29, 635-698, (2004), "adaptative and responsive surfaces through controlled reorganization of interfacial polymer layers"
8. a/ Anthony M.Granville, William J.Brittain, Macromol. Rapid.Comm., vol 25, 1298-1302, (2004) "Stimuli responsive semi fluorinated polymer brushes on porous silica substrates". b/ Lei Thai, Fevzi C.Cebeci, Robert E.Cohen, Michael F.Rubner, NanoLetters, vol 4, 7, 1349-1353, (2004), "stable superhydrophobic coating from polyelectrolyte multilayers". c/ Motoshi Yamanaka, Kazuki Sada, Mikiji Miyata, Knji Hanabusa, Kazunori Nakano, Chem Comm, 2248-2250, (2006), "Construction of superhydrophobic surfaces by fibrous aggregation of perfluoroalkyl chain-containing organogelators"
9. Akira Nakajima, Kazuhito Hashimoto, and Toshiya Watanabe, Langmuir, 16 (17), 7044 - 7047, (2000), "Transparent Superhydrophobic Thin Films with Self-Cleaning Properties"
10. a/Eiji Hosono, Shinobu Fujihara, Itaru Honma, Haoshen Zhou; JACS, vol 127, 13458-13459, (2005), "Superhydrophobicity perpendicular nanopin film by the bottom up process. b/ Xi Yu, Zhiqiang Wang, Yugui Jiang, Feng Shi, Xi Zhang, Adv. Mater. Vol 17, 1289-1293, (2005), "Reversible pH-responsive surface from superhydrophobicity to superhydrophilicity". c/ A. A. Abramzon, Khimia i Zhizu (1982), no. 11, 38 40.
11. J.Rodriguez-Hemandez, F.Checot, Y.Gnanou, S.Lecommandoux, Prog.Polym.Sci., 30, 691-724, (2005), "Toward smart nano-objects by self assembly of block copolymers in solution"

## Claims

1. An AB block copolymer obtainable by a controlled living polymerisation reaction comprising:

(i) a first hydrophobic block A, comprising a polymer selected from the group consisting of:

a homopolymer of a fluorinated acrylate or methacrylate monomer A1;
a random, alternating, gradient or block copolymer, A1A2 comprising:
a fluorinated acrylate or methacrylate monomer A1; and a non-fluorinated acrylate or methacrylate monomer A2;
a random, alternating, gradient or block copolymer, A1A2 comprising:
a fluorinated acrylate or methacrylate monomer A1 and a silyl acrylate or methacrylate monomer A3; and
a random, alternating, gradient or block copolymer, A1A2A3 comprising:
a silyl acrylate or methacrylate monomer A1, a fluorinated acrylate or methacrylate monomer A2 and a non-fluorinated acrylate or methacrylate monomer A3; and

(ii) a second hydrophilic block B comprising a non-fluorinated acrylate or methacrylate monomer wherein

the ratio of the monomers comprising the hydrophilic block A and the hydrophilic block B from which the AB block copolymer is derived leads to the formation of organised aggregates and wherein
the second hydrophilic block B is water soluble and comprises the general formula:

$$-[CH_2-CR^1COOR^2-]-$$

wherein:

$R^1$ is hydrogen or an alkyl group having 1 to 4 carbon atoms; and
$R^2$ is hydrogen, an alkyl group having 1 to 4 carbon atoms, or an aminofunctional group and wherein
the ratio of the monomers comprising the block copolymer AB comprises:

10 to 80 units of A; and 30 to 200 units of B or
20 to 40 units of A; and 80 to 110 units of B or
25 to 35 units of A; and 85 to 100 units of B.

2. A block copolymer as claimed in claim 1 wherein block A preferably comprises;
a random copolymer A1A2 comprising a fluorinated acrylate or methacrylate monomer A1 and a non-fluorinated acrylate or methacrylate monomer A2, or
a homopolymer of a fluorinated acrylate or methacrylate monomer A1.

3. A block copolymer as claimed in claim 1 or 2 wherein fluorinated monomers A1 comprising block A comprise the

general formula:

$$-[CH_2\text{-}CRCOOX]-$$

wherein:

R is hydrogen or an alkyl group comprising 1 to 4 carbon atoms; and
X is a fluorinated alkyl group comprising 1 to 6 carbon atoms or X comprises a fluorinated alkyl group comprising 1 to 4 carbon atoms and wherein
the non-fluorinated acrylate monomers A2 for block A comprise the general formula :

$$-[CH_2\text{-}CRCOOY]-$$

wherein
R is hydrogen or an alkyl group comprising 1 to 4 carbon atoms; and
Y is an alkylaminoalkyl group.

**4.** A block copolymer as claimed in claims 1 to 3 wherein the fluorinated monomer A1 is selected from the group consisting of:

trifluoroethyl methacrylate (TFEMA), trifluoroethyl acrylate (TFEA), pentafluoropropyl methacrylate (PFPMA), pentafluoropropyl acrylate (PFPA), heptafluorobutyl methacrylate (HF8MA) and heptafluorobutyl acrylate (HFBA).

**5.** A block copolymer as claimed in any of the preceding claims wherein block A comprises a polymer of the Formula A1xA2y,
wherein:

A1 comprises a random copolymer of a fluorinated acrylate polymer A1; and
A2 comprises a non-fluorinated acrylate monomer; and wherein
x is the number of repeating units of A1; and
y is the number of repeating units of A2 and wherein:

block A of formula A1 xA2y comprises a random copolymer comprising repeating units of trifluoroethylmethacrylate and diethylaminoethyl methacrylate.

**6.** A block copolymer as claimed in claim 1 wherein the silyl acrylate monomers comprising block A have the general formula:

$$-[CH_2\text{-}CR\text{-}COOZ]-$$

wherein:

R is hydrogen or an alkyl group having 1 to 4 carbon atoms; and
Z is a silyl alkyl group, the alkyl group having 1 to 10 carbon atoms or 1 to 4 carbon atoms.

**7.** A block copolymer as claimed in claim 6 wherein the silyl group is a trialkoxysilyl group.

**8.** A copolymer as claimed in any one of the preceding claims wherein the second hydrophilic block B comprises quatemized dialkylaminoalkyl acrylate or methacrylate monomers of general formula :

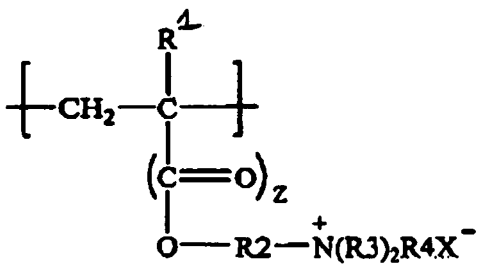

wherein:

R1 is hydrogen or an alkyl group having 1 to 4 carbon atoms, preferably methyl;
z is 0 or 1;
R2 is $-CH_2-CHOH-CH_2$ or $C_xH_{2x}$ wherein x is 2 to 18, preferably 2:
R3 comprises an alkyl group with 1 to 4 carbon atoms, preferably methyl, ethyl;
R4 comprises an alkyl group with 1 to 4 carbon atoms, preferably methyl, ethyl; and
$X^-$ is selected from Cl, Br, I, $1/2SO_4$, $HSO_4$ and $CH_3SO_3$.

**9.** A block copolymer as claimed in any of claims 1 to 5 wherein the second block B comprises monomers selected from the group consisting of:

2-(dimethyl amino) ethyl methacrylate (DMAEMA), 2-(diethyl amino) ethyl methacrylate (DEAEMA), 2-(diisopropyl amino) ethyl methacrylate (DPAEMA), 2-(N-morphollno)ethyl methacrylate (MEMA), or a derivative thereof, methacrylic acid (MAA) or derivative thereof and acrylic acid or a derivative thereof.

**10.** A block copolymer as claimed in claim 1 comprising P(TFEMA-r-DEAEMA)-b-DMAEMA) and P[(TFEMA-r-DEAEMA)-b-MAA].

**11.** Use of a block copolymer according to any one of claims 1 to 10 as a surface coating.

**12.** A substance-delivery carrier comprising a block copolymer according to any one of claims 1 to 10 in combination with a substance to be delivered to a site.

**13.** A method of coating a substrate comprising the steps of dissolving a copolymer according to any one of claims 1 to 10 in an aqueous solution and exposing the substrate to the aqueous solution and further comprising gentle agitation of the copolymer molecules to fully dissolve the molecules in solution.

**14.** An uptake/release method for a substance comprising the steps of mixing an aqueous solution of the substance with a block copolymer as claimed in any one of claims 1 to 10, coating a substrate with the aqueous solution and rinsing the coated substrate at a reduced pH to release the substance.

**15.** A composition comprising:

(a) a block copolymer as claimed in any of claims 1 to 10; and
(b) a liquid medium comprising (i) or (ii); wherein

(i) comprises a mixture of water and an organic solvent; and
(ii) comprises an organic solvent substantially free from water and

wherein the relative proportions of component (a) and component (b) in the composition comprises between 100 : 1 to 1 : 100, preferably from 10 : 1 to 1 to 10, and especially from 2 : 1 to 1 : 2.

## Patentansprüche

**1.** AB-Blockcopolymer, das durch eine kontrollierte lebende Polymerisationsreaktion erhältlich ist, umfassend:

(i) einen ersten hydrophoben Block A umfassend ein Polymer, das aus der Gruppe ausgewählt ist bestehend aus:

einem Homopolymer eines fluorierten Acrylat- oder Methacrylatmonomers A1;
einem statistischen, alternierenden, Gradienten- oder Blockcopolymer A1A2 umfassend:
ein fluoriertes Acrylat- oder Methacrylatmonomer A1; und ein nichtfluoriertes Acrylat- oder Methacrylatmonomer A2;
ein statistisches, alternierendes, Gradienten- oder Blockcopolymer A1A2 umfassend:
ein fluoriertes Acrylat- oder Methacrylatmonomer A1; und ein Silylacrylat- oder - methacrylatmonomer A3; und
ein statistisches, alternierendes, Gradienten- oder Blockcopolymer A1A2A3 umfassend:
ein Silylacrylat- oder -methacrylatmonomer A1, ein fluoriertes Acrylat- oder Methacrylatmonomer A2 und ein nichtfluoriertes Acrylat- oder Methacrylatmonomer A3; und

(ii) einen zweiten hydrophilen Block B umfassend ein nichtfluoriertes Acrylat- oder Methacrylatmonomer, wobei

das Verhältnis der Monomere, die den hydrophilen Block A und den hydrophilen Block B umfassen, von denen das AB-Blockcopolymer abgeleitet ist, zur Bildung von organisierten Aggregaten führt und wobei
der zweite hydrophile Block B wasserlöslich ist und die allgemeine Formel:

$$-[CH_2\text{-}CR^1COOR^2\text{-}]-$$

aufweist, wobei
$R^1$ Wasserstoff oder eine Alkylgruppe ist, die 1 bis 4 Kohlenstoffatome aufweist; und
$R^2$ Wasserstoff, eine Alkylgruppe, die 1 bis 4 Kohlenstoffatome aufweist, oder eine aminofunktionelle Gruppe ist und wobei
das Verhältnis der Monomere, die das Blockcopolymer AB umfassen:

10 bis 80 Einheiten von A; und 30 bis 200 Einheiten von B oder
20 bis 40 Einheiten von A; und 80 bis 110 Einheiten von B oder
25 bis 35 Einheiten von A; und 85 bis 100 Einheiten von B

umfasst.

**2.** Blockcopolymer nach Anspruch 1, wobei der Block A bevorzugt Folgendes umfasst:

ein statistisches CopolymerA1A2 umfassend ein fluoriertes Acrylat- oder Methacrylatmonomer A1 und ein nichtfluoriertes Acrylat- oder Methacrylatmonomer A2 oder
ein Homopolymer eines fluorierten Acrylat- oder Methacrylatmonomers A1.

**3.** Blockcopolymer nach Anspruch 1 oder 2, wobei fluorierte Monomere A1, die einen Block A1 umfassen, die allgemeine Formel:

$$-[CH_2\text{-}CRCOOX]-$$

umfassen, wobei
R Wasserstoff oder eine Alkylgruppe ist, die 1 bis 4 Kohlenstoffatome aufweist; und
X eine fluorierte Alkylgruppe ist, die 1 bis 6 Kohlenstoffatome umfasst, oder X eine fluorierte Alkylgruppe umfasst, die 1 bis 4 Kohlenstoffatome umfasst und wobei die nichtfluorierten Acrylatmonomere A2 für Block A die allgemeine Formel:

$$-[CH_2\text{-}CRCOOY]-$$

umfassen, wobei
R Wasserstoff oder eine Alkylgruppe ist, die 1 bis 4 Kohlenstoffatome umfasst; und
Y eine Alkylaminoalkylgruppe ist.

**4.** Blockcopolymer nach den Ansprüchen 1 bis 3, wobei das fluorierte Monomer A1 aus der Gruppe ausgewählt ist bestehend aus:

Trifluorethylmethacrylat (TFEMA), Trifluorethylacrylat (TFEA), Pentafluorpropylmethacrylat (PFPMA), Pentafluorpropylacrylat (PFPA), Heptafluorbutylmethacrylat (HFBMA) und Heptafluorbutylacrylat (HFBA).

**5.** Blockcopolymer nach einem der vorhergehenden Ansprüche, wobei der Block A ein Polymer der Formel A1xA2y umfasst, wobei
A1 ein statistisches Copolymer eines fluorierten Acrylatpolymers A1 umfasst; und
A2 ein nichtfluoriertes Acrylatmonomer umfasst; und wobei
x die Anzahl von Wiederholungseinheiten von A1 ist; und
y die Anzahl von Wiederholungseinheiten von A2 ist und wobei:

der Block A der Formel AlxA2y ein statistisches Copolymer umfasst, das Wiederholungseinheiten von Trifluorethylmethacrylat und Diethylaminoethylmethacrylat umfasst.

**6.** Blockcopolymer nach Anspruch 1, wobei die Silylacrylatmonomere, die den Block A umfassen, die allgemeine Formel:

$$-[CH_2\text{-}CR\text{-}COOZ]-$$

umfassen, wobei
R Wasserstoff oder eine Alkylgruppe ist, die 1 bis 4 Kohlenstoffatome aufweist; und
Z eine Silylalkylgruppe ist, wobei die Alkylgruppe 1 bis 10 Kohlenstoffatome oder 1 bis 4 Kohlenstoffatome aufweist.

**7.** Blockcopolymer nach Anspruch 6, wobei die Silylgruppe eine Trialkoxysilylgruppe ist.

**8.** Copolymer nach einem der vorhergehenden Ansprüche, wobei der zweite hydrophile Block B quaternisierte Dialkylaminoalkylacrylat- oder - methacrylatmonomere der allgemeinen Formel:

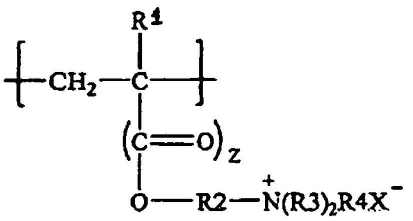

umfasst, wobei
$R^1$ Wasserstoff oder eine Alkylgruppe, die 1 bis 4 Kohlenstoffatome aufweist, bevorzugt Methyl ist;
z 0 oder 1 beträgt;
R2 $-CH_2\text{-}CHOH\text{-}CH_2$ oder $C_xH_{2x}$ ist, wobei x 2 bis 18 , bevorzugt 2, beträgt;
R3 eine Alkylgruppe mit 1 bis 4 Kohlenstoffatomen, bevorzugt Methyl, Ethyl, ist;
R4 eine Alkylgruppe mit 1 bis 4 Kohlenstoffatomen, bevorzugt Methyl, Ethyl, ist; und
X unter Cl, Br, I, $1/2SO_4$, $HSO_4$ und $CH_3SO_3$ ausgewählt ist.

**9.** Blockcopolymer nach einem der Ansprüche 1 bis 5, wobei der zweite Block B Monomere umfasst ausgewählt aus der Gruppe bestehend aus:

2-(Dimethylamino)ethylmethacrylat (DMAEMA), 2-(Diethylamino)ethylmethacrylat (DEAEMA), 2-(Diisopropylamino)ethylmethacrylat (DPAEMA), 2-(N-Morpholino)ethylmethacrylat (MEMA) oder ein Derivat davon, Methacrylsäure (MAA) oder ein Derivat davon und Acrylsäure oder ein Derivat davon.

**10.** Blockcopolymer nach Anspruch 1 umfassend P(TFEMA-r-DEAEMA)-b-DMAEMA) und P[(TFEMA-r-DEAEMA)-b-MAA].

**11.** Verwendung eines Blockcopolymers nach einem der Ansprüche 1 bis 10 als Oberflächenbeschichtung.

**12.** Substanzabgabeträger umfassend ein Blockcopolymer nach einem der Ansprüche 1 bis 10 in Kombination mit einer an eine Stelle abzugebende Substanz.

**13.** Verfahren zum Beschichten eines Substrats, umfassend die Schritte des Lösens eines Copolymers nach einem der Ansprüche 1 bis 10 in einer wässrigen Lösung und Aussetzen des Substrats der wässrigen Lösung und des weiteren umfassend das sachte Rühren der Copolymermoleküle, um die Moleküle in der Lösung vollständig zu lösen.

**14.** Aufnahme-/Freisetzungsverfahren für eine Substanz, umfassend die Schritte des Mischens einer wässrigen Lösung der Substanz mit einem Blockcopolymer nach einem der Ansprüche 1 bis 10, Beschichtens eines Substrats mit der wässrigen Lösung und Spülens des beschichteten Substrats bei einem reduzierten pH-Wert, um die Substanz freizusetzen.

**15.** Zusammensetzung umfassend:

(a) ein Blockcopolymer nach einem der Ansprüche 1 bis 10; und
(b) ein flüssiges Medium umfassend (i) oder (ii); wobei

(i) eine Mischung von Wasser und einem organischen Lösungsmittel umfasst; und
(ii) ein organisches Lösungsmittel umfasst, das im Wesentlichen von Wasser frei ist und wobei die relativen Anteile der Komponente (a) und der Komponente (b) in der Zusammensetzung zwischen 100 : 1 bis 1 : 100, bevorzugt 10 : 1 bis 1 : 10 und insbesondere 2 : 1 bis 1 : 2 umfassen.

**Revendications**

**1.** Copolymère séquencé de type AB pouvant être obtenu par l'intermédiaire d'une réaction de polymérisation vivante contrôlée comprenant:

(i) un premier bloc A hydrophobe, comprenant un polymère choisi par le groupe constitué de:

un homopolymère d'un monomère Al d'acrylate ou de méthacrylate fluoré;
un copolymère aléatoire, alterné, à gradient ou séquencé, A1A2 comprenant:
un monomère A1 d'acrylate ou de méthacrylate fluoré; et un monomère A2 d'acrylate ou de méthacrylate non fluoré;
un copolymère aléatoire, alterné, à gradient ou séquencé, A1A2 comprenant:
un monomère A1 d'acrylate ou de méthacrylate fluoré et un monomère A3 d'acrylate ou de méthacrylate de silyle; et
un copolymère aléatoire, alterné, à gradient ou séquencé, A1A2A3 comprenant:
un monomère A1 d'acrylate ou de méthacrylate de silyle, un monomère A2 d'acrylate ou de méthacrylate fluoré, et un monomère A3 d'acrylate ou de méthacrylate non fluoré; et

(ii) un second bloc B hydrophile comprenant un monomère d'acrylate ou de méthacrylate non fluoré dans lequel

le rapport des monomères comprenant le bloc A hydrophile et le bloc B hydrophile desquels dérive le copolymère séquencé AB conduit à la formation d'agrégats organisés et dans lesquels
le second bloc B hydrophile est soluble dans l'eau et comprend la formule générale:

$$-[CH_2-CR^1COOR^2-]-$$

dans laquelle:

$R^1$ est un atome d'hydrogène ou un groupe alkyle ayant 1 à 4 atome(s) de carbone; et
$R^2$ est un atome d'hydrogène, un groupe alkyle ayant 1 à 4 atome(s) de carbone, ou un groupe fonctionnel aminé et dans laquelle
le rapport des monomères comprenant le copolymère AB séquencé comprend:

10 à 80 motifs de A; et 30 à 200 motifs de B ou
20 à 40 motifs de A; et 80 à 110 motifs de B ou
25 à 35 motifs de A; et 85 à 100 motifs de B.

**2.** Copolymère séquencé tel que revendiqué dans la revendication 1, dans lequel le bloc A comprend de préférence;

un copolymère A1A2 aléatoire comprenant un monomère A1 d'acrylate ou de méthacrylate fluoré et un monomère A2 d'acrylate ou de méthacrylate non fluoré, ou
un homopolymère d'un monomère A1 d'acrylate ou de méthacrylate fluoré.

**3.** Copolymère séquencé tel que revendiqué dans la revendication 1 ou 2, dans lequel les monomères A1 fluorés comprenant le bloc A comprennent la formule générale:

$$-[CH_2\text{-}CRCOOX]-$$

dans laquelle:

R est un atome d'hydrogène ou un groupe alkyle comprenant 1 à 4 atome(s) de carbone; et
X est un groupe alkyle fluoré comprenant 1 à 6 atome(s) de carbone ou X comprend un groupe alkyle fluoré comprenant 1 à 4 atome(s) de carbone et, dans lequel
les monomères A2 d'acrylate non fluoré pour le bloc A comprennent la formule générale:

$$-[CH_2\text{-}CRCOOY]-$$

dans laquelle
R est un atome d'hydrogène ou un groupe alkyle comprenant 1 à 4 atome(s) de carbone; et
Y est un groupe alkylaminoalkyle.

**4.** Copolymère séquencé tel que revendiqué dans la revendication 1 à 3, dans lequel le monomère fluoré A1 est choisi parmi le groupe constitué du:

méthacrylate de trifluoroéthyle (TFEMA), acrylate de trifluoroéthyle (TFEA), méthacrylate de pentafluoropropyle (PFPMA), acrylate de pentafluoropropyle (PFPA), méthacrylate d'heptafluorobutyle (HFBMA) et de l'acrylate d'heptafluorobutyle (HFBA).

**5.** Copolymère séquencé tel que revendiqué dans l'une quelconque des revendications précédentes, dans lequel le bloc A comprend un polymère de la formule A1xA2y,
dans laquelle:

A1 comprend un copolymère aléatoire d'un polymère A1 d'acrylate fluoré; et
A2 comprend un monomère d'acrylate non fluoré; et, dans lequel
x est le nombre de motifs de répétition de A1; et
y est le nombre de motifs de répétition de A2 et, dans lequel:

le bloc A de formule A1xA2y comprend un copolymère aléatoire comprenant des motifs de répétition de méthacrylate de trifluoroéthyle et de méthacrylate de diéthylaminoéthyle.

**6.** Copolymère séquencé tel que revendiqué dans la revendication 1, dans lequel les monomères d'acrylate de silyle comprenant le bloc A ont la formule générale:

$$-[CH_2\text{-}CR\text{-}COOZ]-$$

dans laquelle:

R est un atome d'hydrogène ou un groupe alkyle ayant 1 à 4 atome(s) de carbone; et
Z est un groupe de silyl alkyle, le groupe alkyle ayant 1 à 10 atome(s) de carbone ou 1 à 4 atome(s) de carbone.

**7.** Copolymère séquencé tel que revendiqué dans la revendication 6, dans lequel le groupe silyle est un groupe trialcoxysilyle.

**8.** Copolymère tel que revendiqué dans l'une quelconque des revendications précédentes, dans lequel le second bloc B hydrophile comprend des monomères d'acrylate ou de méthacrylate de dialkylaminoalkyle quatemisé de formule

générale:

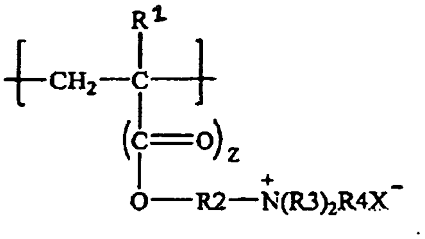

dans laquelle:

R1 est un atome d'hydrogène ou un groupe alkyle ayant 1 à 4 atome(s) de carbone, de préférence un groupe méthyle;
z prend la valeur de 0 ou 1;
R2 est -$CH_2$-CHOH-$CH_2$ ou $C_xH_{2x}$, dans laquelle x est 2 à 18, de préférence 2;
R3 comprend un groupe alkyle avec 1 à 4 atome(s) de carbone, de préférence méthyle, éthyle;
R4 comprend un groupe alkyle avec 1 à 4 atome(s) de carbone, de préférence méthyle, éthyle; et
$X^-$ est choisi parmi Cl, Br, I, 1/2$SO_4$, $HSO_4$ et $CH_3SO_3$.

**9.** Copolymère séquencé tel que revendiqué dans l'une quelconque des revendications 1 à 5, dans lequel le second bloc B comprend des monomères choisis parmi le groupe constitué du:

méthacrylate de 2-(diméthyl amino)éthyle (DMAEMA), méthacrylate de 2-(diéthyl amino)éthyle (DEAEMA), méthacrylate de 2-(diisopropyl amino)éthyle (DPAEMA), méthacrylate de 2-(N-morpholino)éthyle (MEMA), ou un dérivé de ceux-ci, de l'acide méthacrylique (MAA) ou un dérivé de celui-ci et de l'acide acrylique ou un dérivé de celui-ci.

**10.** Copolymère séquencé tel que revendiqué dans la revendication 1, comprenant du P(TFEMA-r-DEAEMA)-b-DMAEMA) et P[(TFEMA-r-DEAEMA)-b-MAA].

**11.** Utilisation d'un copolymère séquencé selon l'une quelconque des revendications 1 à 10, comme revêtement de surface.

**12.** Support de libération de substance comprenant un copolymère séquencé selon l'une quelconque des revendications 1 à 10, en combinaison avec une substance à libérer au niveau d'un site.

**13.** Procédé de revêtement d'un substrat comprenant les étapes de dissolution d'un copolymère selon l'une quelconque des revendications 1 à 10, dans une solution aqueuse et l'exposition du substrat à la solution aqueuse et comprenant en outre l'agitation modérée des molécules de copolymère pour dissoudre entièrement les molécules en solution.

**14.** Procédé de prélèvement/libération d'une substance comprenant les étapes de mélange d'une solution aqueuse de la substance avec un copolymère séquencé tel que revendiqué selon l'une quelconque des revendications 1 à 10, le revêtement d'un substrat de la solution aqueuse et le rinçage du substrat revêtu sous un pH réduit pour libérer la substance.

**15.** Composition comprenant:

(a) un copolymère séquencé tel que revendiqué dans l'une quelconque des revendications 1 à 10; et
(b) un milieu liquide comprenant (i) ou (ii); dans lequel

(i) comprend un mélange d'eau et d'un solvant organique; et
(ii) comprend un solvant organique substantiellement exempt d'eau et

dans laquelle les proportions relatives du composant (a) et du composant (b) dans la composition comprennent entre 100:1 à 1:100, de préférence de 10:1 à 1 à 10, et spécialement de 2:1 à 1:2.

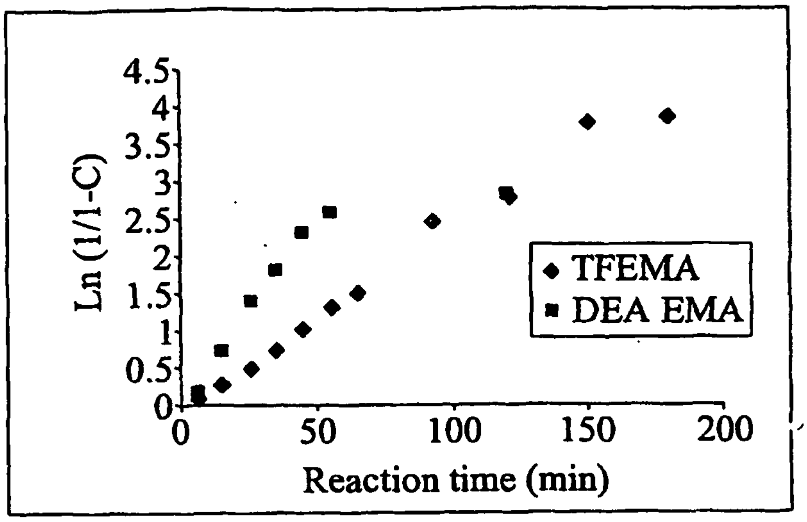

Ln (1/1-C)
4.5
4
3.5
3
2.5
2
1.5
1
0.5
0
0
50
100
150
200
Reaction time (min)
TFEMA
DEA EMA


FIG 1

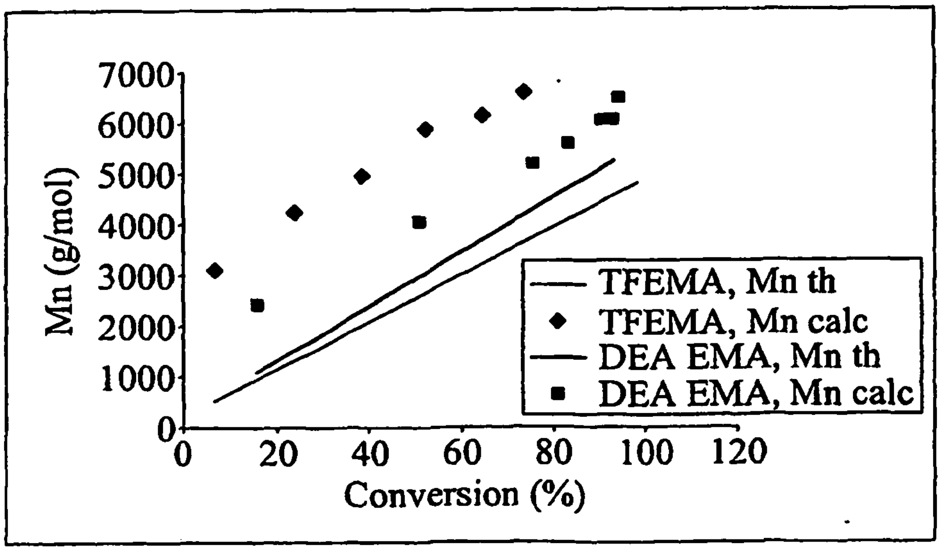

Mn (g/mol)
7000
6000
5000
4000
3000
2000
1000
0
0
20
40
60
80
100
120
Conversion (%)
TFEMA, Mn th
TFEMA, Mn calc
DEA EMA, Mn th
DEA EMA, Mn calc


FIG 2

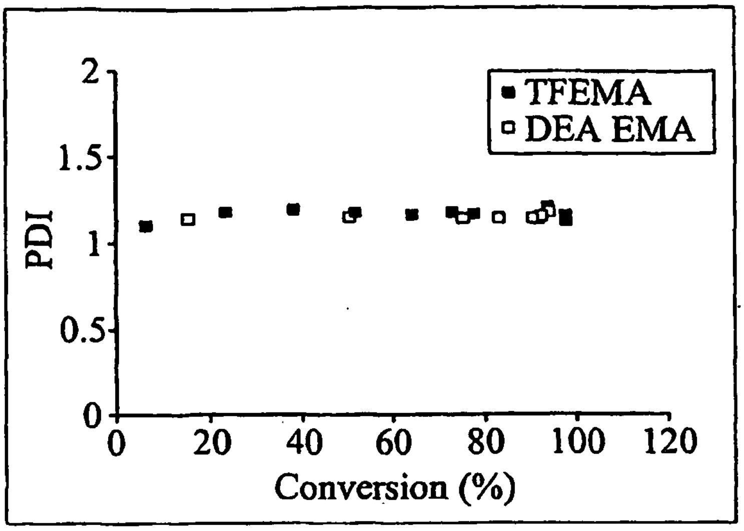


FIG 3

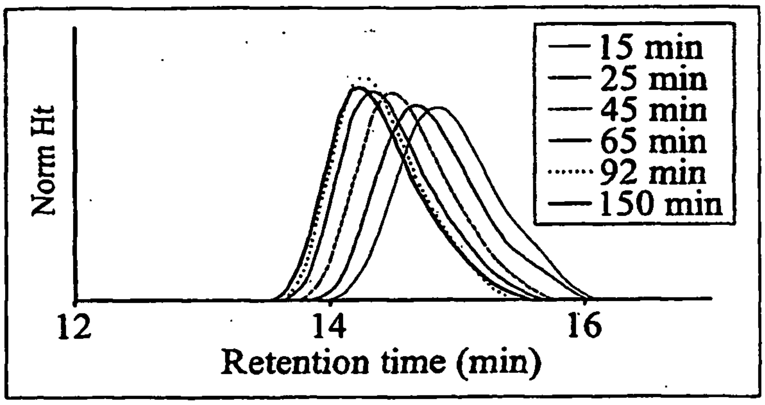


FIG 4

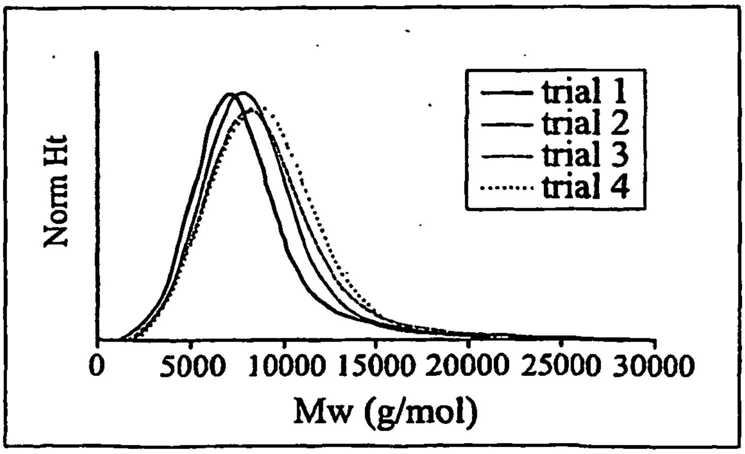


FIG 5

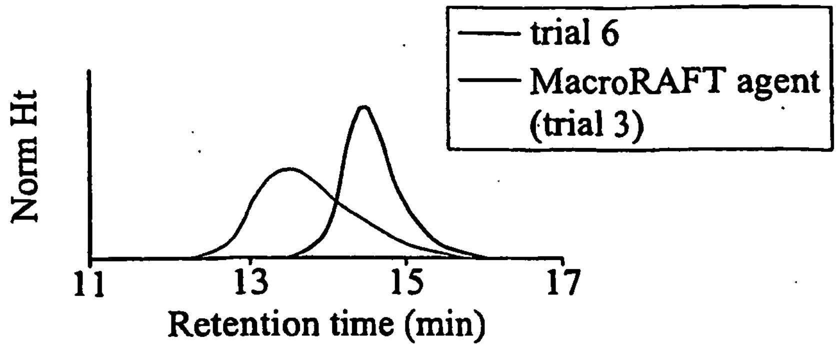


FIG 6

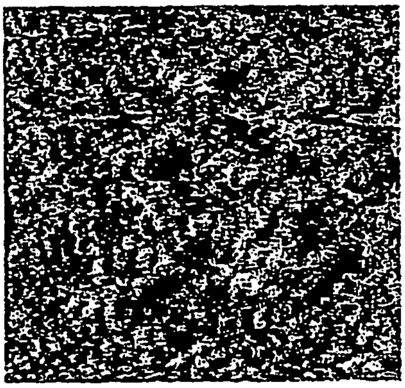

FIG 7

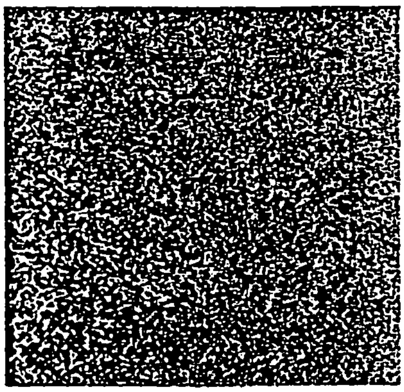

FIG 8

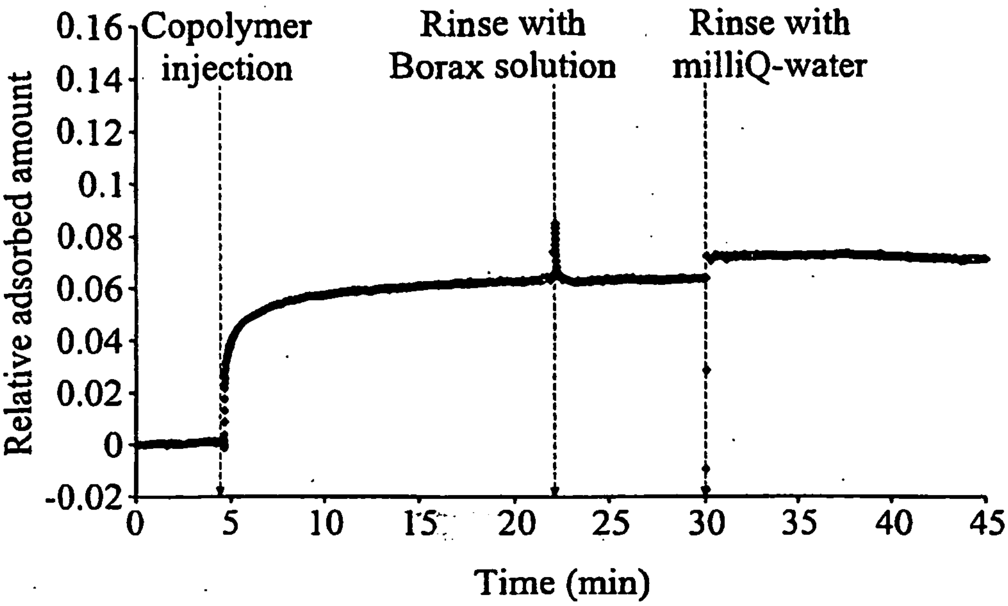
Copolymer injection
Rinse with Borax solution
Rinse with milliQ-water
Relative adsorbed amount
0.16
0.14
0.12
0.1
0.08
0.06
0.04
0.02
0
-0.02
0
5
10
15
20
25
30
35
40
45
Time (min)

FIG 9

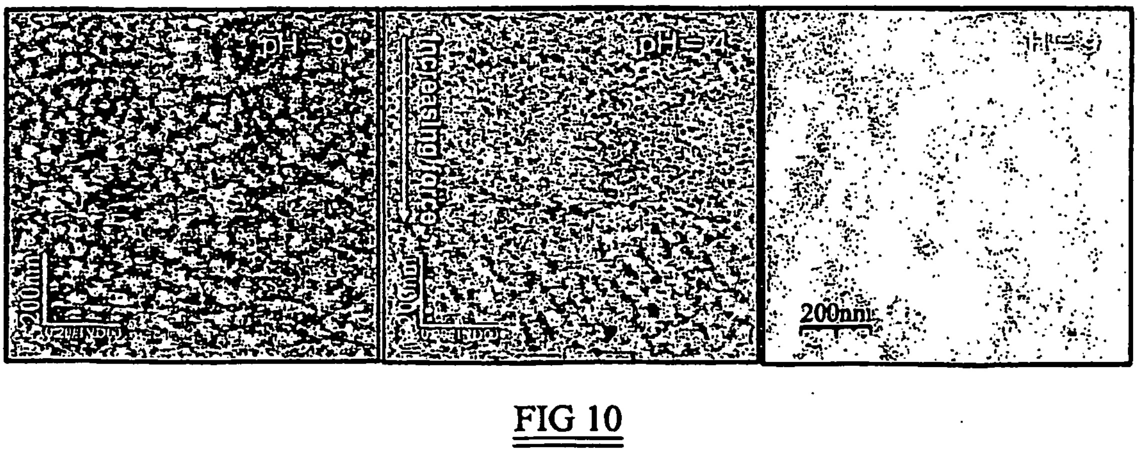
pH = 9
pH = 4
200nm

FIG 10

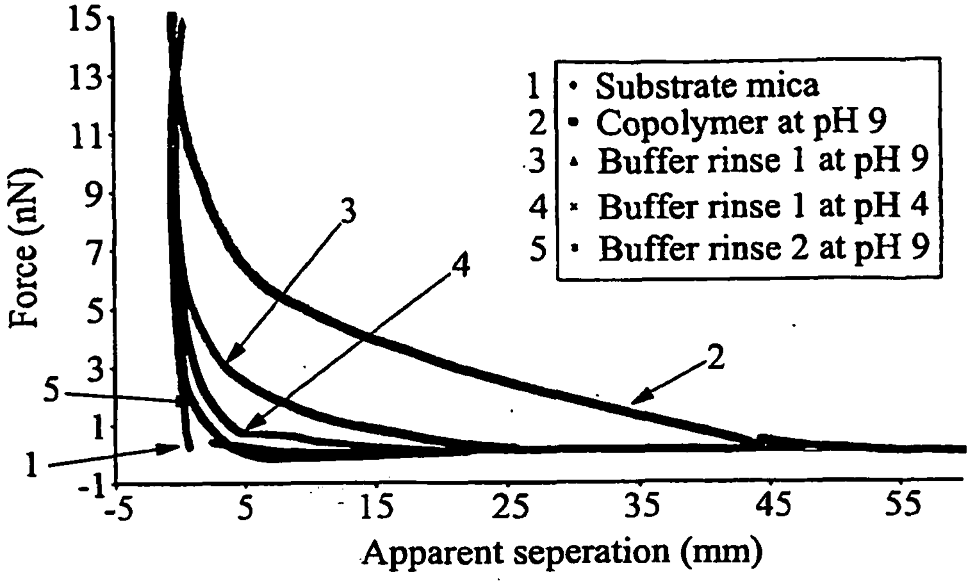
Force (nN)
Apparent seperation (mm)
1 • Substrate mica
2 • Copolymer at pH 9
3 • Buffer rinse 1 at pH 9
4 × Buffer rinse 1 at pH 4
5 • Buffer rinse 2 at pH 9
1
2
3
4
5
15
13
11
9
7
5
3
1
-1
-5
5
15
25
35
45
55

FIG 11

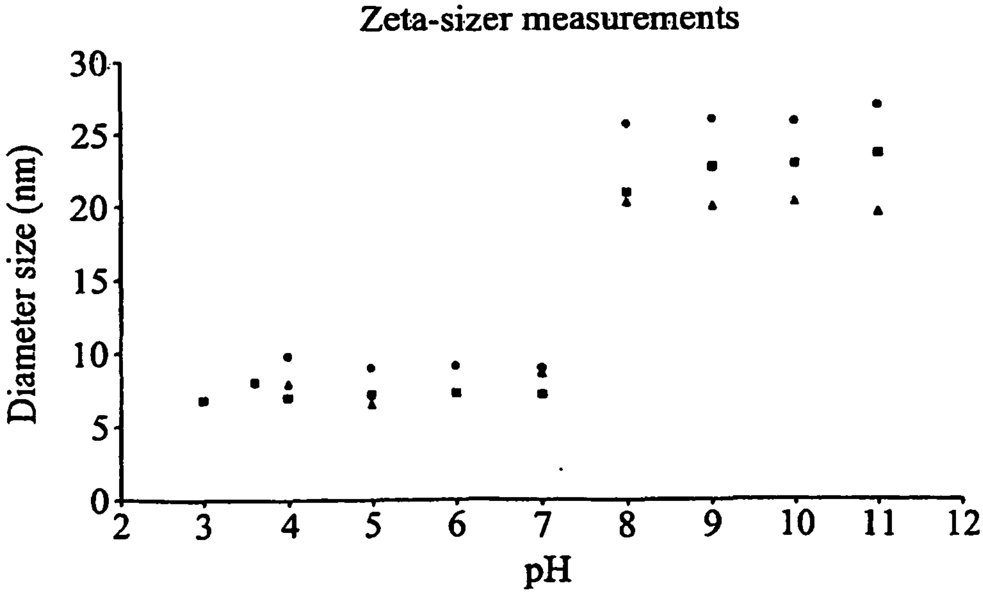
Zeta-sizer measurements
Diameter size (nm)
pH
30
25
20
15
10
5
0
2
3
4
5
6
7
8
9
10
11
12

FIG 12

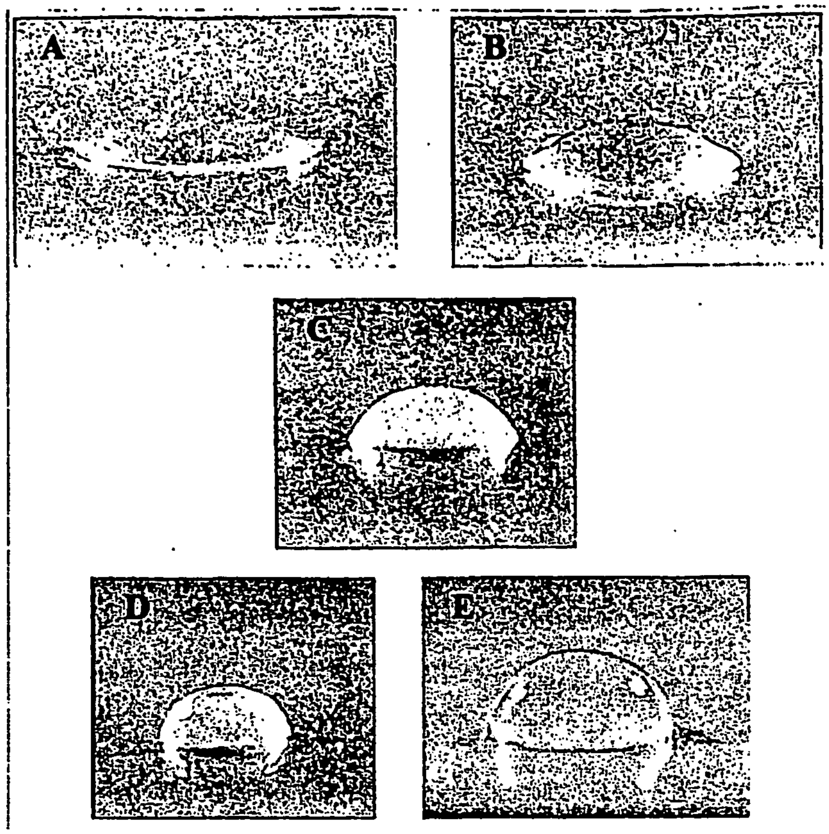
A
B
C
D
E

FIG 13

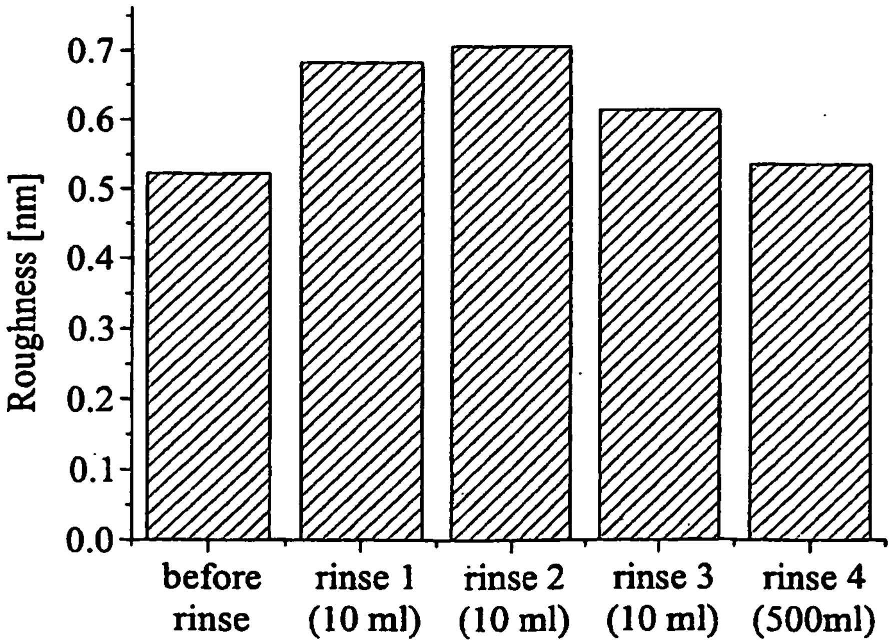
Roughness [nm]
0.0
0.1
0.2
0.3
0.4
0.5
0.6
0.7
before rinse
rinse 1 (10 ml)
rinse 2 (10 ml)
rinse 3 (10 ml)
rinse 4 (500ml)

FIG 14

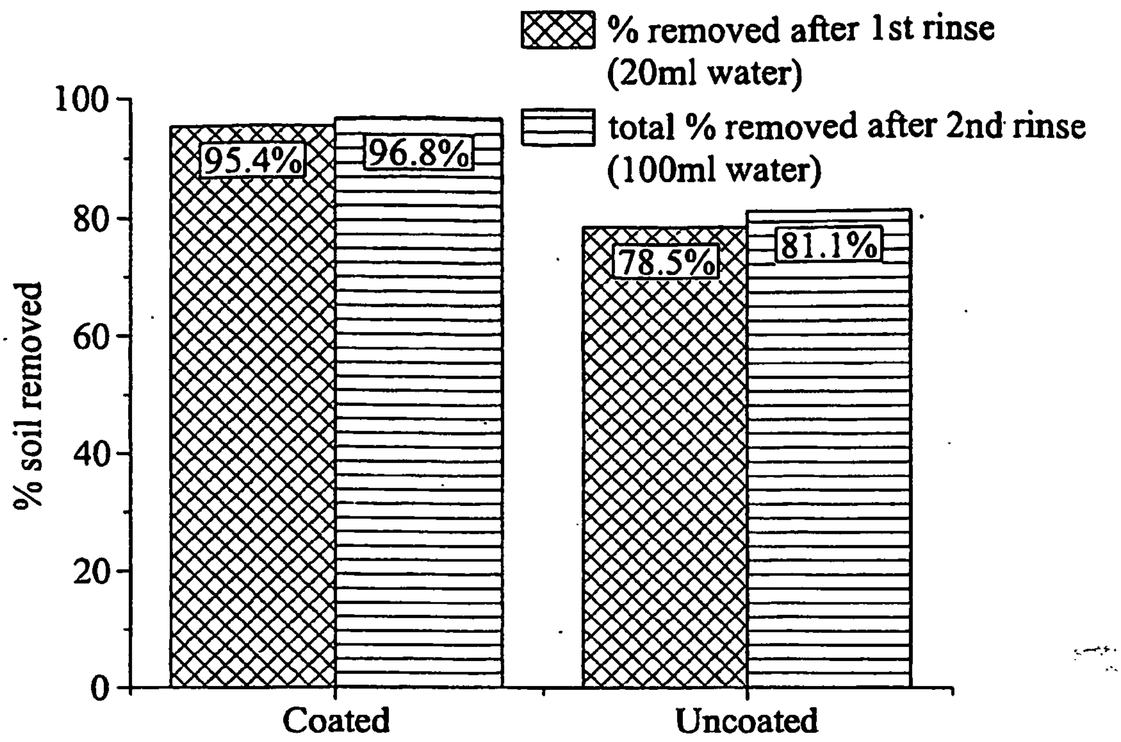
% removed after 1st rinse (20ml water)
total % removed after 2nd rinse (100ml water)
% soil removed
100
80
60
40
20
0
95.4%
96.8%
78.5%
81.1%
Coated
Uncoated

FIG 15

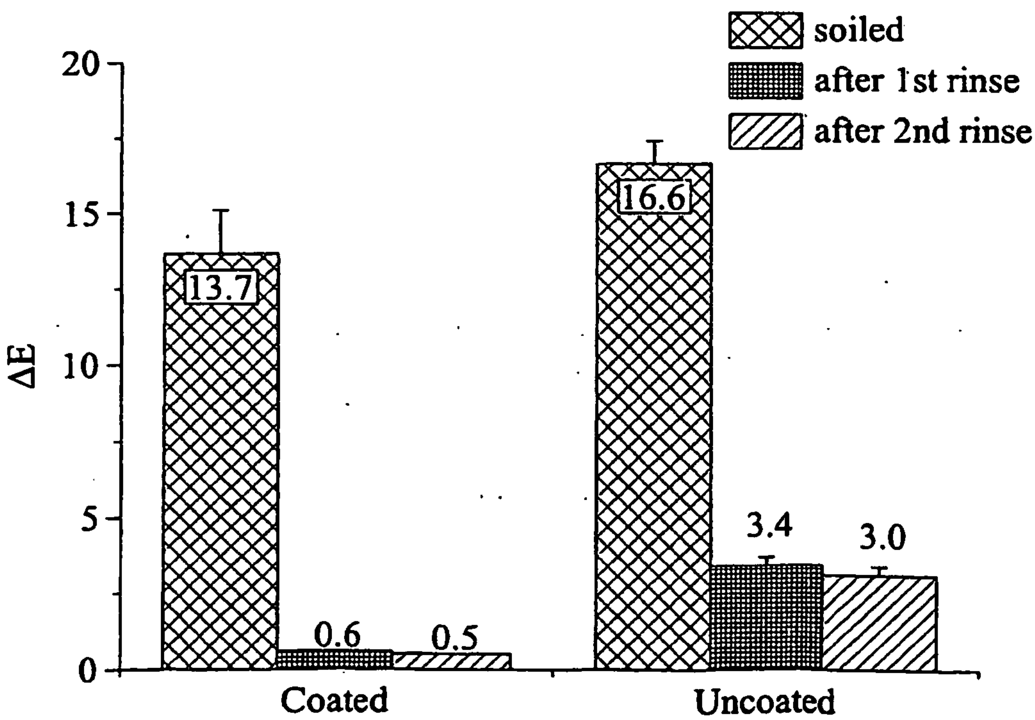
soiled
after 1st rinse
after 2nd rinse
ΔE
20
15
10
5
0
13.7
0.6
0.5
16.6
3.4
3.0
Coated
Uncoated

FIG 16

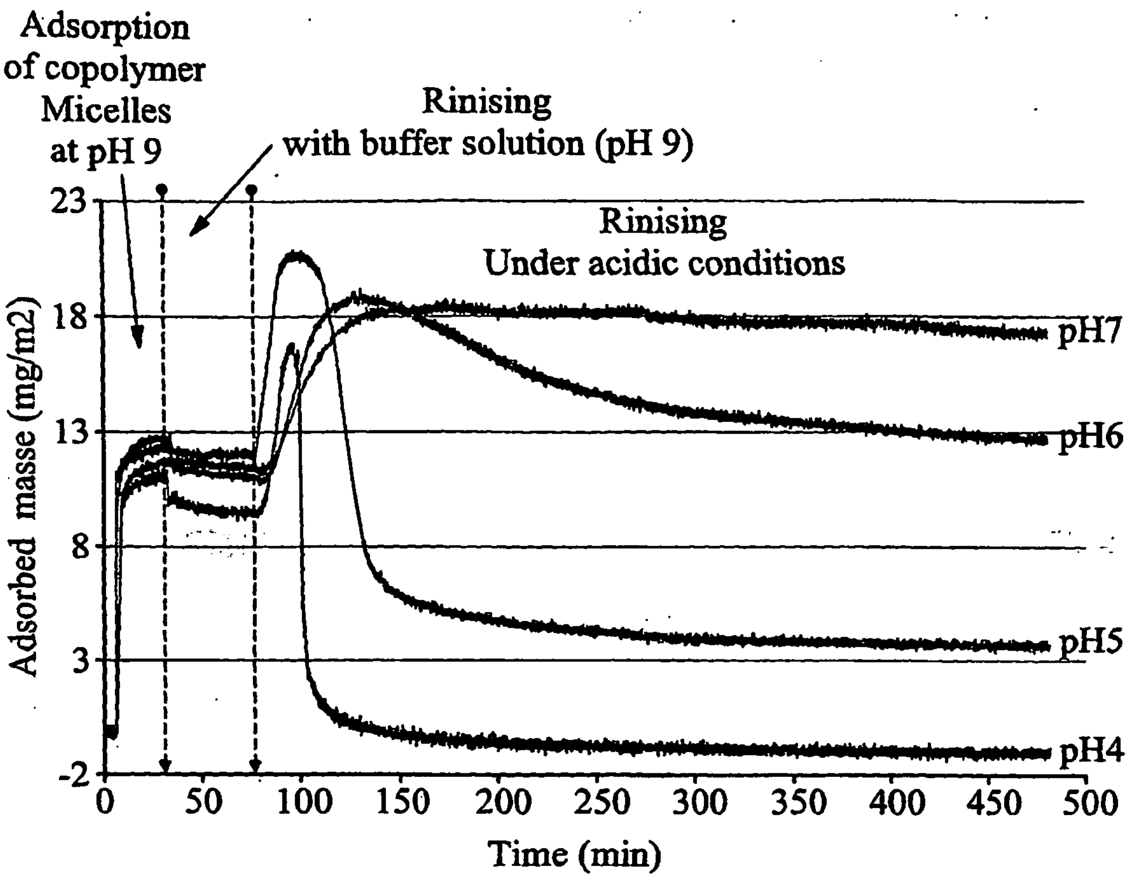


FIG 17

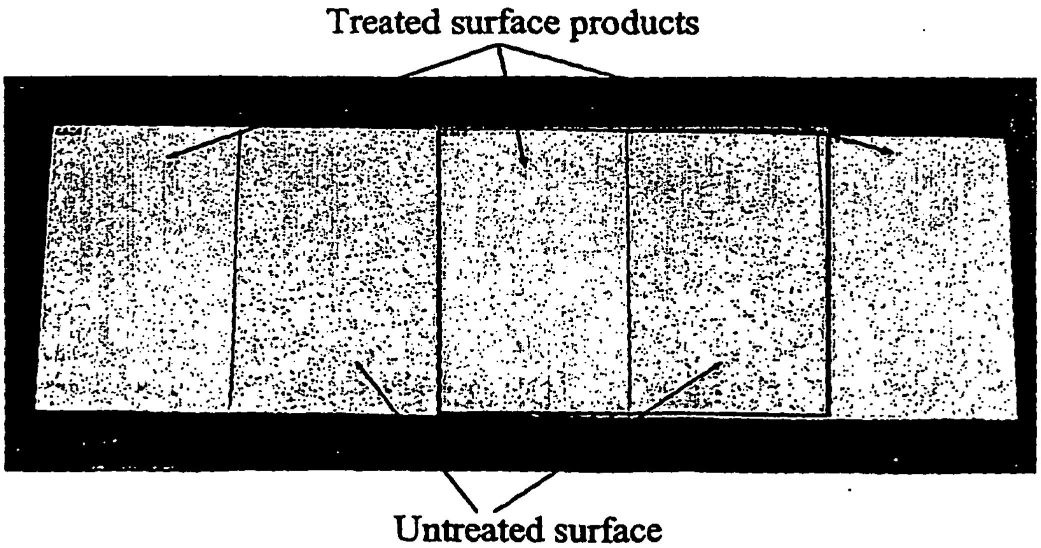


FIG 18A

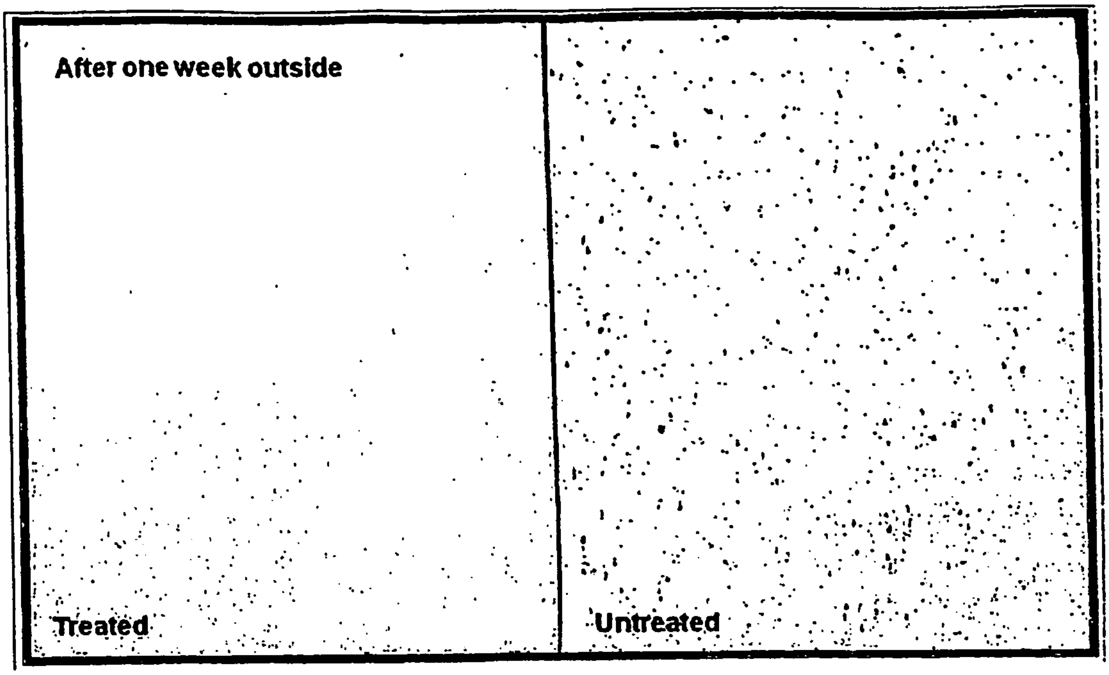


FIG 18B

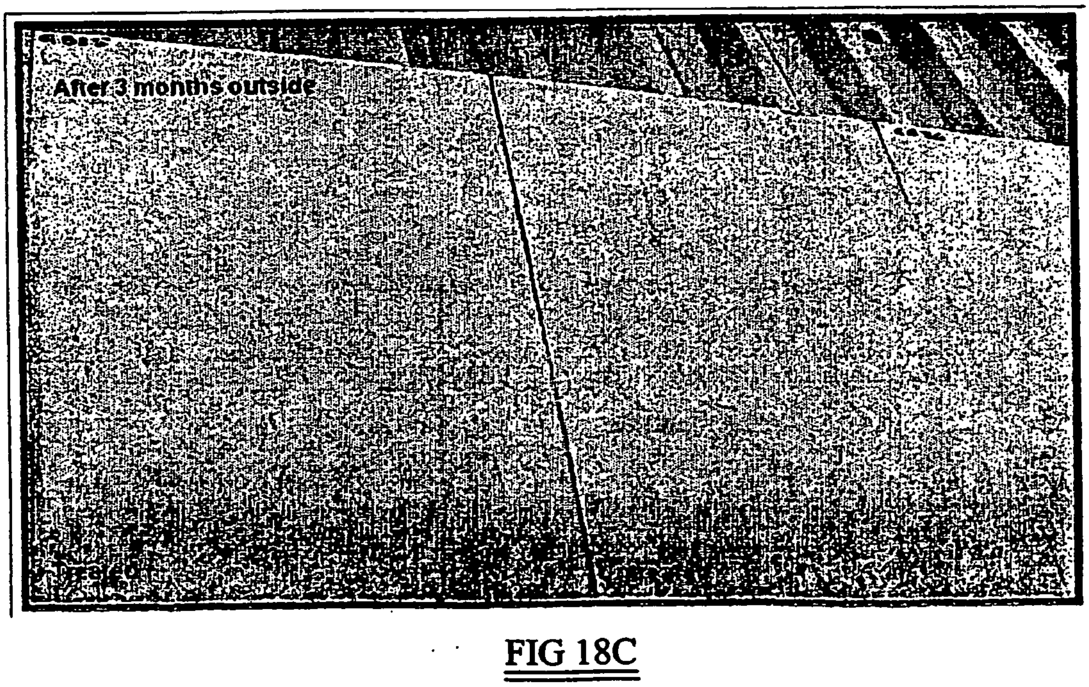


FIG 18C

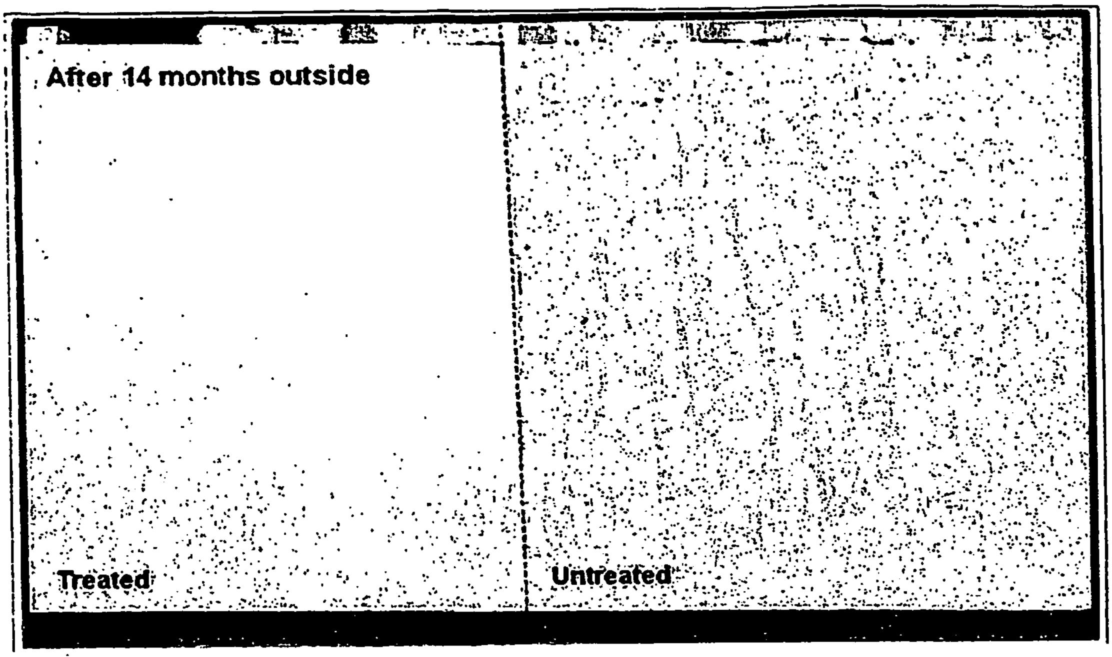


FIG 18D

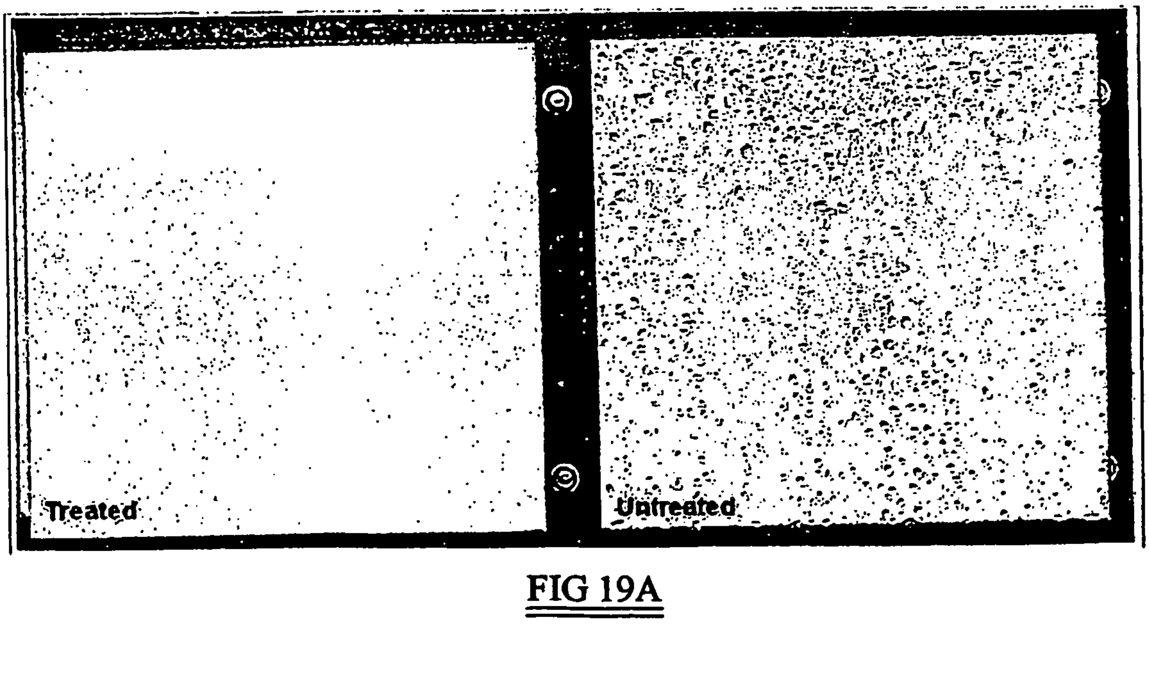


FIG 19A

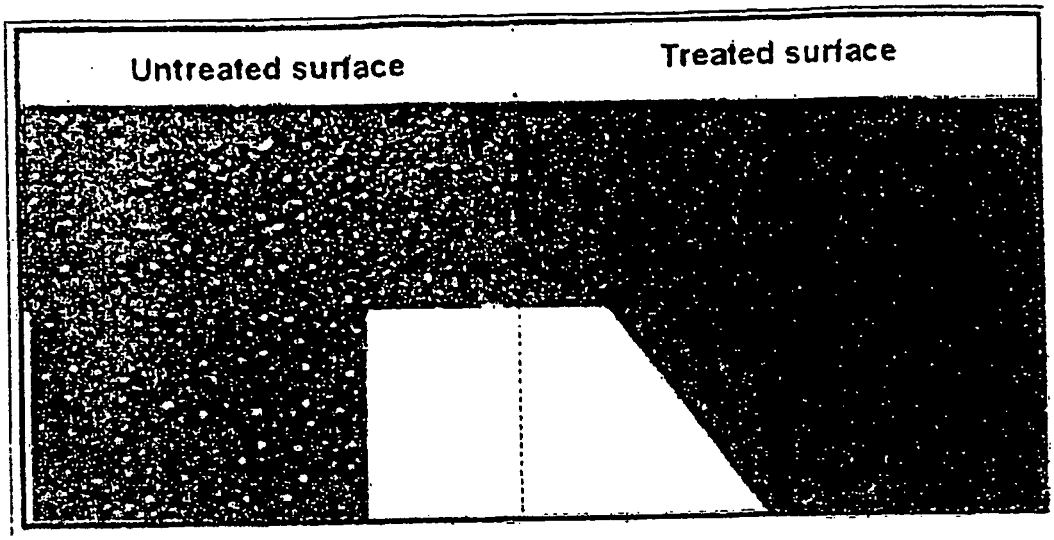


FIG 19B

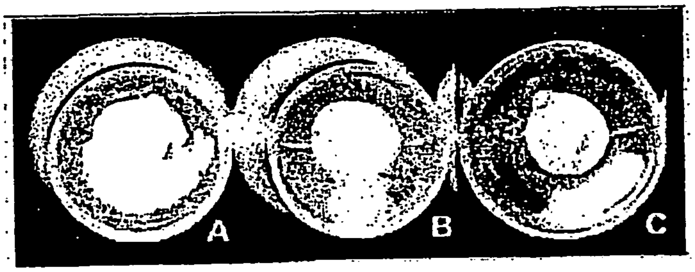


FIG 20

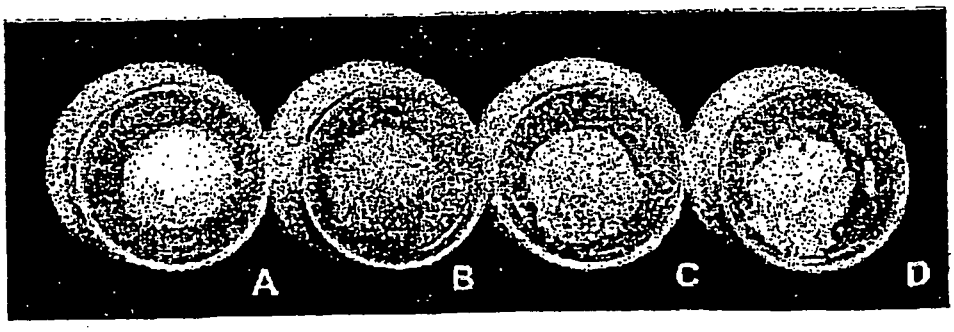


FIG 21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9604123 A
- US 20020048679 A
- EP 1018531 A
- EP 542598 A
- US 1106630 A
- US 2004026053 A
- US 5324566 A
- US 5599489 A
- EP 0933388 A2
- US 20020150723 A
- US 20020150724 A
- US 20020150725 A
- US 20020150726 A
- US 20030013795 A
- US 200310147932 A
- US 3354022 A
- US 6800354 B
- US 7112621 B2
- US 7196043 B
- DE 10016485
- US 5759980 A
- DE 2161591 A
- US 6846512 B2


### Non-patent literature cited in the description


- **DICKER IB ; COHEN GM ; FAMHAM WB ; HERTLER WR ; LAGANIS ED ; SOGAH DY.** *Macromolecules,* 1990, vol. 23, 4034-4041
- **EMMA DOREY.** No more need to clean. *Chemistry& industry,* September 2006, vol. 18, 5
- **RALF BLOSSEY.** Self-cleaning surfaces-virtual realities. *Nature Materials,* 2003, vol. 2, 301-306
- **JON EVANS.** Go with the flow. *Chemistry& industry,* September 2006, vol. 18, 16-17
- **MATHILDE CALLIES ; DAVID QUÉRÉ.** On water repellency. *Soft matter,* 2005, vol. 1, 55-61
- **TAOLEI SUN ; WENLONG SONG ; LEI JIANG.** Control over the responsive wettability of poly(NIPAAm) film in a large extent by introducing an irresponsive molecule. *Chem.Comm.,* 2005, 1723-1725
- **S. HERMINGHAUS.** Roughness-induced non-wetting. *Europhys. Lett.,* vol. 52, 165
- **J. BICO ; U. THIELE ; D. QUÉRÉ.** Wetting of textured surfaces. *Colloids Surf., A,* 2002, vol. 206, 41
- **H. LI ; X. WANG ; Y. SONG ; Y. LIU ; Q. LI ; L. JIANG ; D. ZHU.** Super-"Amphiphobic" Aligned Carbon Nanotube Films. *Angew. Chem.,* 2001, vol. 40, 1743
- **L. FENG ; S. LI ; H. LI ; J. ZHAI ; Y. SONG ; L. JIANG ; D. ZHU.** SuperHydrophobic Surface of Aligned Polyacrylonitrile Nanofibers. *Angew. Chem.,* 2002, vol. 41, 1221
- **L. FENG ; Y. SONG ; J. ZHAI ; B. LIU ; J. XU ; L. JIANG ; D. ZHU.** Creation of a Superhydrophobic Surface from an Amphiphilic Polymer. *Angew. Chem.,* 2003, vol. 42, 800
- **T. ONDA ; S. SHIBUICHI ; N. SATOH ; K. TSUJII.** Super-Water-Repelient Fractal Surfaces. *Langmuir,* 1996, vol. 12, 2125
- **IGOR LUZINOV ; SERGIY MINKY ; VLADIMIR V.TSUKRUK.** adaptative and responsive surfaces through controlled reorganization of interfacial polymer layers. *Prog.Polym.Sci.,* 2004, vol. 29, 635-698
- **ANTHONY M.GRANVILLE ; WILLIAM J.BRITTAIN.** Stimuli responsive semi fluorinated polymer brushes on porous silica substrates. *Macromol. Rapid.Comm.,* 2004, vol. 25, 1298-1302
- **LEI THAI ; FEVZI C.CEBECI ; ROBERT E.COHEN ; MICHAEL F.RUBNER.** stable superhydrophobic coating from polyelectrolyte multilayers. *NanoLetters,* 2004, vol. 4 (7), 1349-1353
- **MOTOSHI YAMANAKA ; KAZUKI SADA ; MIKIJI MIYATA ; KNJI HANABUSA ; KAZUNORI NAKANO.** Construction of superhydrophobic surfaces by fibrous aggregation of perfluoroalkyl chain-containing organogelators. *Chem Comm,* 2006, 2248-2250
- **AKIRA NAKAJIMA ; KAZUHITO HASHIMOTO ; TOSHIYA WATANABE.** Transparent Superhydrophobic Thin Films with Self-Cleaning Properties. *Langmuir,* 2000, vol. 16 (17), 7044-7047
- **EIJI HOSONO ; SHINOBU FUJIHARA ; ITARU HONMA ; HAOSHEN ZHOU.** Superhydrophobicity perpendicular nanopin film by the bottom up process. *JACS,* 2005, vol. 127, 13458-13459

- **XI YU ; ZHIQIANG WANG ; YUGUI JIANG ; FENG SHI ; XI ZHANG.** Reversible pH-responsive surface from superhydrophobicity to superhydrophilicity. *Adv. Mater.,* 2005, vol. 17, 1289-1293
- **A. A. ABRAMZON.** *Khimia i Zhizu,* 1982, 38-40
- **J.RODRIGUEZ-HEMANDEZ ; F.CHECOT ; Y.GNANOU ; S.LECOMMANDOUX.** Toward smart nano-objects by self assembly of block copolymers in solution. *Prog.Polym.Sci.,* 2005, vol. 30, 691-724